# EUROPÄISCHE PATENTANMELDUNG

(11) **EP 1 582 781 A1**
(43) Veröffentlichungstag der Anmeldung: **05.10.2005**
(21) Anmeldenummer: 05004980.8
(22) Anmeldetag: 08.03.2005
(51) Int. Cl.: F16J 15/02, F16J 15/16, B08B 3/04, F16J 15/10

(54) **Flächendichtung zur Anordnung an einem Bauteil und Verfahren zum Anordnen einer Flächendichtung an einem Bauteil**

(30) Priorität: 30.03.2004 DE 102004015324
(71) Anmelder: Dürr Ecoclean GmbH, 70794 Filderstadt (DE)
(72) Erfinder: Buchmann, Richard, Dr., 73337 Bad Überkingen (DE); Metzger, Andreas, 70794 Filderstadt (DE)
(74) Vertreter: Hoeger, Stellrecht & Partner Patentanwälte

(57) **Zusammenfassung**

Um eine Flächendichtung (178) zur Anordnung an einem Bauteil (112), dessen Material eine andere Wärmedehnung aufweist als das Material der Flächendichtung (178), zu schaffen, welche in einem großen Temperaturbereich ohne Ermüdungsgefahr einsetzbar und in einfacher Weise an dem Bauteil (112) montierbar ist, wird vorgeschlagen, daß die Flächendichtung (178) mit Ausgleichsausnehmungen (192) versehen ist, die jeweils mindestens einen Ausgleichsbereich (194,196) umfassen, dessen Breite sich im montierten Zustand der Flächendichtung (178) bei einer Änderung der Temperatur der Flächendichtung (178) so verändert, daß die unterschiedlichen Wärmedehnungen der Flächendichtungen (178) und des Bauteils (112) zumindest teilweise (vorzugsweise im wesentlichen vollständig) ausgeglichen werden.

## Beschreibung

Die vorliegende Erfindung betrifft eine Flächendichtung zur Anordnung an einem Bauteil, dessen Material eine andere Wärmedehnung aufweist als das Material der Flächendichtung.

Hohe Unterschiede zwischen den Wärmedehnungen treten beispielsweise dann auf, wenn die Flächendichtung aus einem Kunststoff, insbesondere aus einem Fluorpolymer, und das Bauteil, an dem die Flächendichtung anzuordnen ist, aus einem metallischen Material, beispielsweise aus einem Stahl, gebildet ist.

Große Unterschiede in den Wärmedehnungen von Flächendichtung und Bauteil können Leckagen und eine vorzeitige Ermüdung des Materials der Flächendichtung zur Folge haben. Außerdem gestaltet sich die Montage der Flächendichtung an dem Bauteil als problematisch. Wird die Flächendichtung so ausgelegt, daß sie bei einer gegenüber der Raumtemperatur erhöhten Betriebstemperatur spannungsfrei an dem Bauteil anliegt, und bei dieser erhöhten Temperatur an dem Bauteil angeordnet, so wird sie bei ihrer Abkühlung auf Raumtemperatur durch ihre thermische Kontraktion über ihre Elastizitätsgrenze hinaus gedehnt. Bei einer folgenden Wiedererwärmung auf die Betriebstemperatur würde die Flächendichtung dann unkontrolliert Wellen werfen.

Wird die Flächendichtung hingegen bei Raumtemperatur auf das Bauteil aufgezogen, so muß sie in diesem kalten Zustand entsprechend (in einer Größenordnung von ein Prozent) gedehnt werden, wofür ein enormer Kraftaufwand erforderlich ist.

Der vorliegenden Erfindung liegt daher die Aufgabe zugrunde, eine Flächendichtung der eingangs genannten Art zu schaffen, welche in einem großen Temperaturbereich ohne Ermüdungsgefahr einsetzbar und in einfacher Weise an dem Bauteil montierbar ist.

Diese Aufgabe wird bei einer Flächendichtung mit den Merkmalen des Oberbegriffs von Anspruch 1 erfindungsgemäß dadurch gelöst, daß die Flächendichtung mit Ausgleichsausnehmungen versehen ist, die jeweils mindestens einen Ausgleichsbereich umfassen, dessen Breite sich im montierten Zustand der Flächendichtung bei einer Änderung der Temperatur der Flächendichtung so verändert, daß die unterschiedlichen Wärmedehnungen der Flächendichtungen und des Bauteils zumindest teilweise (vorzugsweise im wesentlichen vollständig) ausgeglichen werden.

Der erfindungsgemäßen Lösung liegt das Konzept zugrunde, die unterschiedlichen Wärmedehnungen von Flächendichtung und Bauteil durch eine Änderung der Abmessungen der Ausgleichsbereiche der Ausgleichsausnehmungen ganz oder teilweise zu kompensieren, so daß weder im Betriebszustand noch bei Raumtemperatur die Elastizitätsgrenze des Materials der Flächendichtung überschritten wird.

Die erfindungsgemäße Flächendichtung ist in einem großen Temperaturbereich ohne Ermüdungsgefahr einsetzbar und kann aufgrund der Kompensationswirkung der Ausgleichsausnehmungen ohne allzu großen Kraftaufwand bei Raumtemperatur an dem Bauteil montiert werden.

Grundsätzlich kann die erfindungsgemäße Flächendichtung an einer beliebigen Fläche des Bauteils angeordnet sein.

Insbesondere kann die Flächendichtung zur Anordnung an einer im wesentlichen ebenen Fläche des Bauteils vorgesehen sein, beispielsweise zur Anordnung an einer ebenen Dichtfläche, auf welcher ein Deckel mit Zugangsöffnungen hin- und hergleitet.

Bei einer bevorzugten Ausgestaltung der Erfindung ist die Flächendichtung jedoch zur Anordnung an einer Mantelfläche des Bauteils vorgesehen.

Das Bauteil kann insbesondere im wesentlichen zylindrisch ausgebildet sein.

Insbesondere kann vorgesehen sein, daß die Flächendichtung im montierten Zustand das Bauteil ringförmig umgibt.

Besonders günstig ist es, wenn die Flächendichtung einstückig ausgebildet ist, da eine solche einstückige Flächendichtung besonders einfach handhabbar ist.

Um eine Ausdehnung unterschiedlicher Wärmedehnungen von Flächendichtung und Bauteil längs einer Umfangsrichtung des Bauteils kompensieren zu können, ist es günstig, wenn mindestens einige der Ausgleichsausnehmungen jeweils mindestens einen Ausgleichsbereich umfassen, der eine quer, vorzugsweise im wesentlichen senkrecht, zu einer Umfangsrichtung des Bauteils ausgerichtete Längsrichtung aufweist.

Entsprechend ist es, um unterschiedliche Wärmedehnungen von Flächendichtung und Bauteil längs einer quer zu der Umfangsrichtung des Bauteils gerichteten Richtung kompensieren zu können, günstig, wenn mindestens einige der Ausgleichsausnehmungen jeweils mindestens einen Ausgleichsbereich umfassen, der eine im wesentlichen parallel zu der Umfangsrichtung des Bauteils ausgerichtete Längsrichtung aufweist.

Bei einer bevorzugten Ausgestaltung der Erfindung ist vorgesehen, daß mindestens einige der Ausgleichsausnehmungen jeweils mindestens zwei Ausgleichsbereiche umfassen.

Um unterschiedliche Wärmedehnungen von Flächendichtung und Bauteil in jeder beliebigen Richtung kompensieren zu können, ist es hierbei von Vorteil, wenn die mindestens zwei Ausgleichsbereiche derselben Ausgleichsausnehmung quer, vorzugsweise im wesentlichen senkrecht, zueinander ausgerichtete Längsrichtungen aufweisen.

Ferner hat es sich als günstig erwiesen, wenn mindestens einige der Ausgleichsausnehmungen jeweils einen zentralen Bereich umfassen, in den mindestens zwei Ausgleichsbereiche der jeweiligen Ausgleichsausnehmung münden.

Insbesondere kann vorgesehen sein, daß die mindestens zwei Ausgleichsbereiche der jeweiligen Ausgleichsausnehmung, welche in den zentralen Bereich der Ausgleichsausnehmung münden, quer, vorzugsweise im wesentlichen senkrecht, zueinander ausgerichtete Längsrichtungen aufweisen.

Wenn das Bauteil, an dem die Flächendichtung anzuordnen ist, Hohlräume aufweist, so weist die Flächendichtung außer den Ausgleichsausnehmungen vorteilhafterweise Zugangsöffnungen auf, welche im montierten Zustand der Flächendichtung den Hohlräumen in dem Bauteil zugeordnet sind, um den Zugang von außen zu diesen Hohlräumen zu ermöglichen.

Wenn die Flächendichtung diese Zugangsöffnungen voneinander trennende Stege umfaßt, so sind vorzugsweise mindestens einige der Ausgleichsausnehmungen der Flächendichtung in Kreuzungsbereichen dieser Stege angeordnet.

Insbesondere dann, wenn die Flächendichtung außer den Ausgleichsausnehmungen keine gitterartig angeordneten Zugangsöffnungen aufweist, ist es von Vorteil, wenn die Flächendichtung mindestens eine Doppelreihe von Ausgleichsausnehmungen umfaßt, wobei die Doppelreihe eine erste Reihe von Ausgleichsausnehmungen und eine zweite Reihe von Ausgleichsausnehmungen umfaßt, die zweite Reihe von Ausgleichsausnehmungen im wesentlichen parallel zu der ersten Reihe von Ausgleichsausnehmungen ausgerichtet ist und die Ausgleichsausnehmungen der zweiten Reihe relativ zu den Ausgleichsausnehmungen der ersten Reihe in der Längsrichtung der Reihen versetzt angeordnet sind.

Um eine Wärmedehnungskompensation der Flächendichtung in mindestens zwei quer zueinander ausgerichteten Richtungen zu ermöglichen, umfaßt die Flächendichtung vorzugsweise mindestens zwei Doppelreihen von Ausgleichsausnehmungen, die quer, vorzugsweise im wesentlichen senkrecht, zueinander verlaufen.

Pro Ausdehnungsdichtung, in der eine Wärmedehnungskompensation erfolgen soll, ist vorzugsweise mindestens eine Doppelreihe vorgesehen. Jedoch kann die Flächendichtung auch mit mehr als einer Doppelreihe pro Ausdehnungsrichtung versehen sein.

Das Material der Flächendichtung umfaßt vorzugsweise einen Kunststoff mit geringer Gleitreibung. Besonders geeignet ist ein Fluorpolymer oder ein Fluorpolymer-Compound, da diese Stoffe eine hohe chemische Beständigkeit und eine geringe Reibung aufweisen.

Anspruch 17 ist auf eine Kombination aus einem Bauteil und einer an dem Bauteil angeordneten erfindungsgemäßen Flächendichtung gerichtet, wobei das Bauteil an seinem Umfang mit Mitnehmerelementen zum Spannen der Flächendichtung versehen ist.

Solche Mitnehmerelemente erlauben es, die Flächendichtung in einfacher Weise bei Raumtemperatur auf das Bauteil aufzuziehen.

Diese Mitnehmerelemente sind vorzugsweise relativ zu dem Bauteil beweglich.

Insbesondere kann vorgesehen sein, daß die Mitnehmerelemente mittels Befestigungsschrauben an dem Bauteil gehalten sind.

Der vorliegenden Erfindung liegt ferner die Aufgabe zugrunde, ein Verfahren zum Anordnen einer Flächendichtung an einem Bauteil, dessen Material eine andere Wärmedehnung aufweist als das Material der Flächendichtung, zu schaffen, welches in einfacher Weise und ohne großen apparativen Aufwand durchführbar ist.

Diese Aufgabe wird durch ein Verfahren zum Anordnen einer Flächendichtung an einem Bauteil, dessen Material eine andere Wärmedehnung aufweist als das Material der Flächendichtung, gelöst, wobei die Flächendichtung mit Ausgleichsausnehmungen versehen ist, welche jeweils mindestens einen Ausgleichsbereich aufweisen, dessen Breite sich im montierten Zustand der Flächendichtung bei einer Änderung der Temperatur der Flächendichtung so verändert, daß die Unterschiede in den Wärmedehnungen der Flächendichtung und des Bauteils verringert werden, vorzugsweise im wesentlichen ausgeglichen werden, wobei das Verfahren den folgenden Verfahrensschritt umfaßt:.
- Anordnen der Flächendichtung an dem Bauteil bei einer Montagetempe- ratur, die von einer Betriebstemperatur des Bauteils verschieden ist, wo- bei die Flächendichtung mit einer mechanischen Spannung beaufschlagt wird und die Ausgleichsbereiche mindestens einiger der Ausgleichsaus- nehmungen ihre Breite unter Einwirkung der mechanischen Spannung verändern.

Das erfindungsgemäße Verfahren ermöglicht es insbesondere, die Flächendichtung bei Raumtemperatur an dem Bauteil anzuordnen und entsprechend der Differenz der Wärmedehnungen von Flächendichtung und Bauteil zu dehnen, ohne daß hierfür das volle Material der Flächendichtung gedehnt werden muß. Vielmehr genügt es bei dem erfindungsgemäßen Verfahren, die an die Ausgleichsausnehmungen angrenzenden Bereiche der Flächendichtung geringfügig zu verformen, und der Großteil der für die Montage der Flächendichtung erforderlichen Verformung wird durch eine Veränderung der Breite der Ausgleichsbereiche der Ausgleichsausnehmungen erzielt.

Bei einer bevorzugten Ausgestaltung des erfindungsgemäßen Verfahrens ist vorgesehen, daß sich die Breite der Ausgleichsbereiche mindestens einiger der Ausgleichsausnehmungen bei einer Änderung der Temperatur der Flächendichtung von der Montagetemperatur zu der Betriebstemperatur verändert.

Insbesondere kann vorgesehen sein, daß sich die Breite der Ausgleichsbereiche mindestens einiger der Ausgleichsausnehmungen bei einer Änderung der Temperatur der Flächendichtung von der Montagetemperatur zu der Betriebstemperatur verringert.

Die Montage der Flächendichtung an dem Bauteil gestaltet sich besonders einfach, wenn die Flächendichtung bei der Montage mittels an dem Bauteil angeordneter Mitnehmerelemente gespannt wird.

Insbesondere kann vorgesehen sein, daß die Flächendichtung bei der Montage an dem Bauteil zumindest zeitweise mit einer im wesentlichen parallel zu einer Umfangsrichtung des Bauteils gerichteten mechanischen Spannkraft beaufschlagt wird.

Alternativ oder ergänzend hierzu kann vorgesehen sein, daß die Flächendichtung bei der Montage an dem Bauteil zumindest zeitweise mit einer im wesentlichen quer, vorzugsweise im wesentlichen senkrecht, zu einer Umfangsrichtung des Bauteils gerichteten mechanischen Spannkraft beaufschlagt wird.

Bei einer bevorzugten Ausgestaltung des erfindungsgemäßen Verfahrens ist vorgesehen, daß die Flächendichtung bei der Montage an dem Bauteil in einer Montagephase mit einer im wesentlichen parallel zu einer Umfangsrichtung des Bauteils gerichteten mechanischen Spannkraft und während einer anderen Montagephase mit einer im wesentlichen quer, vorzugsweise im wesentlichen senkrecht, zu der Umfangsrichtung des Bauteils gerichteten mechanischen Spannkraft beaufschlagt wird.

Auf diese Weise ist es möglich, die Flächendichtung sukzessive in einer Richtung parallel zu der Umfangsrichtung des Bauteils und in einer Richtung quer zu der Umfangsrichtung des Bauteils in dem erforderlichen Ausmaß zu dehnen.

Die erfindungsgemäße Flächendichtung eignet sich insbesondere zur Verwendung in einer Behandlungsvorrichtung zur Behandlung von Werkstücken, die in Aufnahmekammern durch die Behandlungsvorrichtung transportiert werden, wobei die Flächendichtung die Aufnahmekammern gegeneinander und gegen ein Gehäuse der Behandlungsvorrichtung abdichtet.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen horizontalen Querschnitt durch eine Behandlungsvorrichtung;
- Fig. 2: einen schematischen vertikalen Längsschnitt durch die Behandlungsvorrichtung aus Fig. 1;
- Fig. 3: eine schematische Darstellung einer Übergabevorrichtung zum Transportieren von Werkstücken zwischen zwei Kammerebenen der Behandlungsvorrichtung;
- Fig. 4: einen schematischen vertikalen Längsschnitt durch die Behandlungsvorrichtung, wobei eine Kammertrommel der Behandlungsvorrichtung aus einem Gehäuse der Behandlungsvorrichtung herausgehoben wird;
- Fig. 5: eine schematische Abwicklung einer Flächendichtung der Behandlungsvorrichtung in einem kalten Montagezustand;
- Fig. 6: eine schematische Draufsicht auf eine Ausgleichsausnehmung der Flächendichtung aus Fig. 5, deren Ausgleichsbereiche in dem kalten Montagezustand verbreitert sind;
- Fig. 7: eine schematische Abwicklung der Flächendichtung aus Fig. 5 in einem warmen Betriebszustand;
- Fig. 8: eine schematische Draufsicht auf eine Ausgleichsausnehmung der Flächendichtung, deren Ausgleichsbereiche in dem warmen Betriebszustand verengt sind;
- Fig. 9: eine ausschnittsweise schematische Draufsicht auf die Umfangsfläche einer Kammertrommel der Behandlungsvorrichtung mit einer auf die Kammertrommel aufgelegten Flächendichtung, bevor die Flächendichtung durch Mitnehmerelemente der Kammertrommel gedehnt worden ist;
- Fig. 10: ein ausschnittsweiser schematischer radialer Schnitt durch einen Randbereich der Kammertrommel mit der aufgelegten Flächendichtung, bevor die Flächendichtung mittels der Mitnehmerelemente gedehnt worden ist, mit der Blickrichtung in Richtung des Pfeiles 10 in Fig. 9;
- Fig. 11: eine der Fig. 9 entsprechende Darstellung, nachdem die Flächendichtung mittels der Mitnehmerelemente gedehnt worden ist;

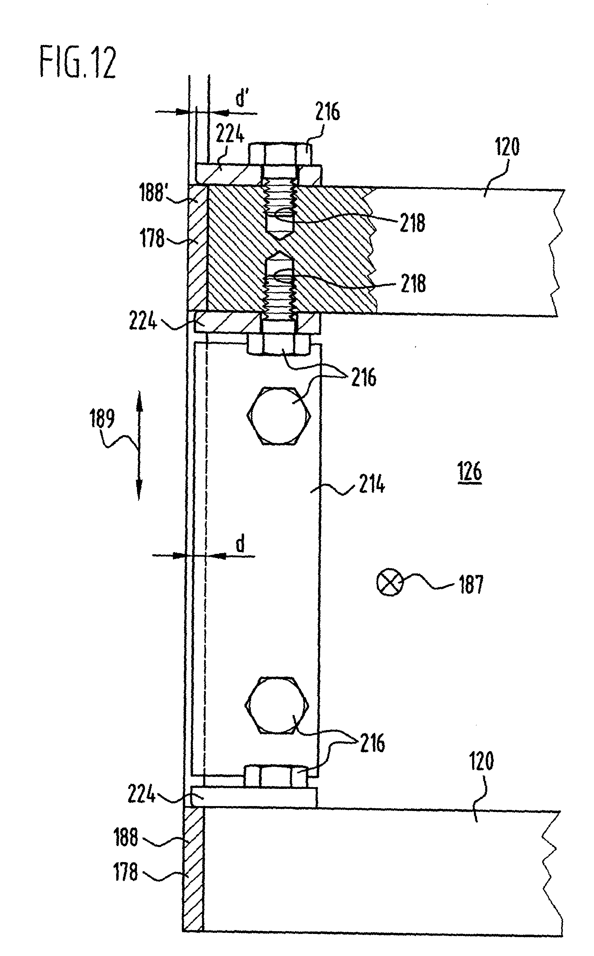

- Fig. 12: eine der Fig. 10 entsprechende Darstellung, nachdem die Flächendichtung mittels der Mitnehmerelemente gedehnt worden ist, mit der Blickrichtung in Richtung des Pfeiles 12 in Fig. 11;
- Fig. 13: eine schematische Darstellung einer Vorrichtung zum Drehen eines Werkstücks in einer Aufnahmekammer, wobei die Drehvorrichtung eine durch eine Wand der Aufnahmekammer hindurchgeführte Antriebswelle umfaßt;
- Fig. 14: eine schematische Darstellung einer Drehvorrichtung zum Drehen eines Werkstücks in einer Aufnahmekammer, wobei die Drehvorrichtung durch Reibschluß mit dem Gehäuse der Behandlungsvorrichtung angetrieben wird;
- Fig. 15: einen schematischen horizontalen Schnitt durch eine Kammerebene der Behandlungsvorrichtung, die als Vakuumschleuse ausgebildet ist;
- Fig. 16: eine schematische Darstellung einer Vorrichtung mit einer Welle, die sich durch eine Trennwand von einem mit einem ersten Medium gefüllten ersten Raum in einen mit einem zweiten Medium gefüllten zweiten Raum erstreckt, wobei die Welle an ihrer zylindrischen Mantelfläche zur Abdichtung zwischen den beiden Räumen mit einer ringförmigen Flächendichtung versehen ist;
- Fig. 17: einen Ausschnitt aus einer schematischen Abwicklung der Flächendichtung aus Fig. 16 in einem warmen Betriebszustand;
- Fig. 18: einen Ausschnitt aus einer schematischen Abwicklung der Flächendichtung aus Fig. 16 in einem kalten Montagezustand;
- Fig. 19: einen Ausschnitt aus einer schematischen Abwicklung einer weiteren Ausführungsform der Flächendichtung aus Fig. 16 in einem warmen Betriebszustand;
- Fig. 20: einen Ausschnitt aus einer schematischen Abwicklung der weiteren Ausführungsform einer Flächendichtung aus Fig. 19 in einem kalten Montagezustand;
- Fig. 21: einen Ausschnitt aus einer schematischen Abwicklung einer weiteren Ausführungsform der Flächendichtung aus Fig. 16 in einem warmen Betriebszustand;
- Fig. 22: einen Ausschnitt aus einer schematischen Abwicklung der weiteren Ausführungsform einer Flächendichtung aus Fig. 21 in einem kalten Montagezustand; und
- Fig. 23: eine schematische Draufsicht auf eine Flächendichtung mit zwei senkrecht zueinander verlaufenden Doppelreihen von Ausgleichsausnehmungen.

Gleiche oder funktional äquivalente Elemente sind in allen Figuren mit denselben Bezugszeichen bezeichnet.

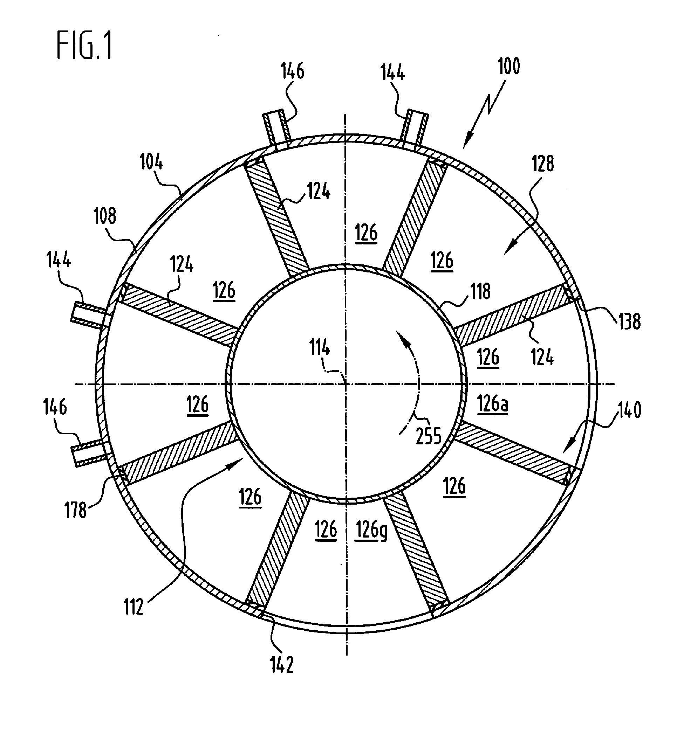

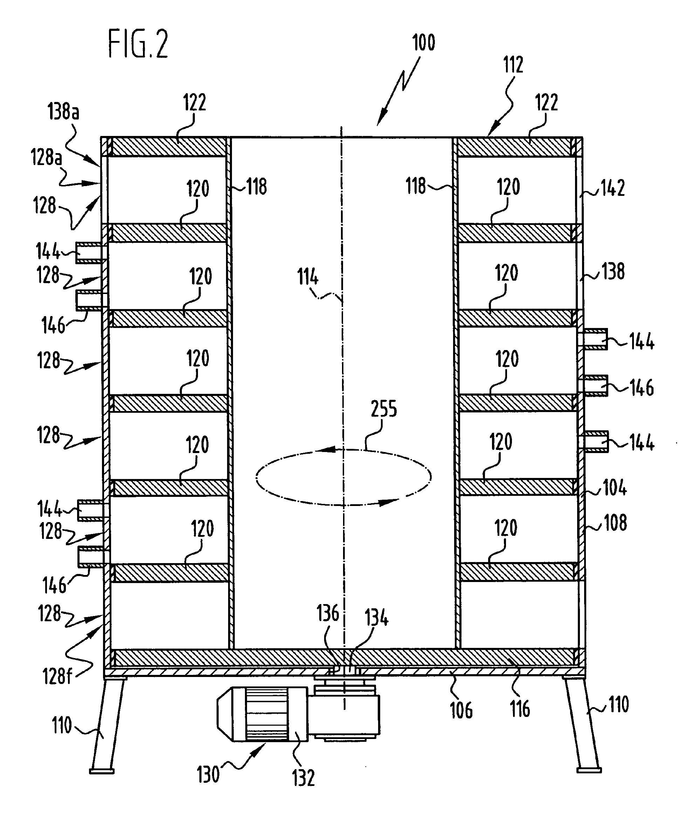

Eine in den Fig. 1 bis 8 dargestellte, als Ganzes mit 100 bezeichnete Behandlungsvorrichtung zur verfahrenstechnischen Behandlung von Werkstücken 102 umfaßt ein Gehäuse 104 mit einer kreisscheibenförmigen Bodenplatte 106 und einer hohlzylindrischen Gehäusewand 108, welche sich von der Oberseite der Bodenplatte 106 aus nach oben erstreckt (siehe Fig. 2).

Die Bodenplatte 106 des Gehäuses 104 ruht auf mehreren Stützen 110, welche sich an einem (nicht dargestellten) Untergrund abstützen.

Nach oben ist das Gehäuse 104 offen.

Im Innenraum des Gehäuses 104 ist eine als Ganzes mit 112 bezeichnete Kammertrommel um eine im wesentlichen vertikale Drehachse 114 drehbar angeordnet.

Die Kammertrommel 112 umfaßt an ihrem unteren Ende eine kreisscheibenförmige Trommelbodenplatte 116, von deren Oberseite sich eine hohlzylindrische, koaxial zu der Trommelbodenplatte 116 ausgerichtete Hohlwelle 118 nach oben erstreckt.

Die Höhe der Trommelbodenplatte 116 und der Hohlwelle 118 entsprechen zusammen im wesentlichen der Höhe der Gehäusewand 108.

Von der Außenseite der Hohlwelle 118 erstrecken sich mehrere kreisscheibenringförmige Bodenplatten 120 und eine am oberen Ende der Hohlwelle 118 angeordnete kreisscheibenringförmige Deckplatte 122 in radialer und horizontaler Richtung nach außen, wobei die Bodenplatten 120 in axialer Richtung der Hohlwelle 118 voneinander, von der Trommelbodenplatte 116 bzw. von der Deckplatte 122 beabstandet sind.

Wie aus Fig. 1 zu ersehen ist, erstrecken sich von der Außenseite der Hohlwelle 118 ferner vertikale Trennwände 124 in radialer Richtung nach außen, wobei jede der Trennwände 124 jeweils zwischen zwei Bodenplatten 120, zwischen einer Bodenplatte 120 und der Trommelbodenplatte 116 oder zwischen einer Bodenplatte 120 und der Deckplatte 122 angeordnet ist.

Durch jeweils zwei vertikale Trennwände 124, durch einen Abschnitt der Hohlwelle 118 und durch zwei Bodenplatten 120 oder durch eine Bodenplatte 120 und die Trommelbodenplatte 116 oder durch eine Bodenplatte 120 und die Deckplatte 122 wird jeweils eine Aufnahmekammer 126 der Kammertrommel 112 begrenzt.

Die Aufnahmekammern 126, welche in derselben Höhe in der Kammertrommel 112 angeordnet sind, bilden zusammen eine Kammerebene 128 der Kammertrommel 112.

Die beispielhaft dargestellte Behandlungsvorrichtung 100 umfaßt somit eine Kammertrommel 112 mit sechs Kammerebenen 128, welche jeweils acht Aufnahmekammern 126 umfassen.

Die Anzahl der Aufnahmekammern 126 muß jedoch nicht in jeder Kammerebene 128 dieselbe sein; vielmehr kann die Anzahl der Aufnahmekammern pro Kammerebene 128 beliebig variieren.

Insbesondere kann vorgesehen sein, daß in einer oder in mehreren Kammerebenen eine oder mehrere der Trennwände 124 zwischen aufeinanderfolgenden Aufnahmekammern 126 entfallen.

Alle Aufnahmekammern 126 derselben Kammerebene 128 und die Aufnahmekammern 126 verschiedener Kammerebenen 128 sind drehfest miteinander verbunden, so daß sie gemeinsam um die Drehachse 114 der Kammertrommel 112 drehbar sind.

Zum Antrieb dieser Drehvorrichtung dient ein als Ganzes mit 130 bezeichneter Drehantrieb, der einen an der Unterseite der Bodenplatte 106 des Gehäuses 104 angeordneten Drehantriebsmotor 132, beispielsweise einen elektrischen Getriebemotor, umfaßt.

Die Abtriebswelle 134 des Drehantriebsmotors 132 ist durch eine mittige Durchtrittsöffnung 136 in der Bodenplatte 106 des Gehäuses 104 hindurchgeführt und mit der Unterseite der Trommelbodenplatte 116 der Kammertrommel 112 drehfest verbunden.

Um das Einbringen von Werkstücken 102 in die Behandlungsvorrichtung 100 zu ermöglichen, ist die Gehäusewand 108 auf der Höhe der obersten Kammerebene 128a mit einer, beispielsweise viereckigen, Zutrittsöffnung 138a versehen. Die Ausdehnung der Zutrittsöffnung 138a entspricht im wesentlichen der Ausdehnung der von den vertikalen Trennwänden 124, der Bodenplatte 120 und der Deckplatte 122 begrenzten Mündungsöffnung 140 jeder der Aufnahmekammern 126 der obersten Kammerebene 128a, so daß die Aufnahmekammern 126 der obersten Kammerebene 128a abwechselnd in eine Beiadestellung gebracht werden können, in welcher die Mündungsöffnung 140 der jeweiligen Aufnahmekammer 126 mit der Zutrittsöffnung 138a in der Gehäusewand 108 fluchtet, wie dies in Fig. 1 für die Kammer 126a dargestellt ist.

Nach dem Einbringen eines zu behandelnden Werkstücks 102 durch die Zutrittsöffnung 138 in die jeweils mit der Zutrittsöffnung 138 fluchtende Aufnahmekammer 126 wird die betreffende Aufnahmekammer 126 mit dem darin angeordneten Werkstück 102 durch die Drehbewegung der Kammertrommel 112 - kontinuierlich oder taktweise - um einen Drehwinkel von weniger als 360 Grad um die Drehachse 114 in eine Übergabestellung gedreht, in welcher die Mündungsöffnung 140 der betreffenden Aufnahmekammer 126 mit einer Austrittsöffnung 142 fluchtet, welche in der Gehäusewand 108 ebenfalls auf der Höhe der obersten Kammerebene 128a angeordnet ist. In der Fig. 1 hat die Aufnahmekammer 126g gerade diese Übergabestellung erreicht.

Vorzugsweise entspricht der Winkelabstand zwischen der Austrittsöffnung 142 und der Zutrittsöffnung 138 einer Kammerebene 128 dem Umfangswinkel, über den sich eine der Aufnahmekammern 126 oder mehrere Aufnahmekammern 126 der betreffenden Kammerebene 128 erstrecken.

Auf dem Weg zwischen der Zutrittsöffnung 138 und der Austrittsöffnung 142 kann das in der Aufnahmekammer 126 angeordnete Werkstück 102 einer beliebigen verfahrenstechnischen Behandlung unterworfen werden.

Diese verfahrenstechnischen Behandlungen können beispielsweise Wärmebehandlungen, insbesondere Glühbehandlungen, wie beispielsweise das "Weichglühen" von Tuben, oder Trocknungsbehandlungen, wie beispielsweise das Trocknen einer Lackbeschichtung des Werkstücks 102 sein.

Ferner kann es sich bei den verfahrenstechnischen Behandlungen beispielsweise um ein Sandstrahlen eines Werkstücks 102 oder um ein Bedampfen eines Werkstücks 102 handeln.

Andere mögliche Behandlungen eines Werkstücks 102 sind beispielsweise Waschbehandlungen mit wäßrigen oder kohlenwasserstoffhaltigen Flüssigkeiten und/oder solche Behandlungen, die unter Schutzgas oder im Vakuum erfolgen müssen.

Auf jeder Kammerebene 128 kann das Werkstück 102 einem oder mehreren solcher verfahrenstechnischer Behandlungsschritte unterworfen werden.

Wenn der Aufnahmekammer 126 für eine solche Behandlung ein Behandlungsmedium zugeführt werden soll, so geschieht dies über Zuführstutzen 144, die an der Gehäusewand 108 an der Winkelposition angeordnet sind, welche von der Aufnahmekammer 126 zum gewünschten Behandlungszeitpunkt passiert wird. Um ein Behandlungsmedium aus einer Aufnahmekammer 126 abzuführen, sind an der Gehäusewand 108 Abführstutzen 146 vorgesehen, die gegenüber dem jeweils zugeordneten Zuführstutzen 144 um einen Drehwinkel versetzt sind, welcher der gewünschten Behandlungsdauer entspricht.

Der Abführstutzen 146 für ein Behandlungsmedium muß sich aber nicht notwendigerweise auf derselben Ebene befinden wie der Zuführstutzen 144 für dasselbe Behandlungsmedium. Vielmehr kann vorgesehen sein, daß ein auf einer Ebene der Behandlungsvorrichtung 100 zugeführtes Behandlungsmedium erst auf einer unmittelbar oder mittelbar darauffolgenden Ebene wieder abgeführt wird.

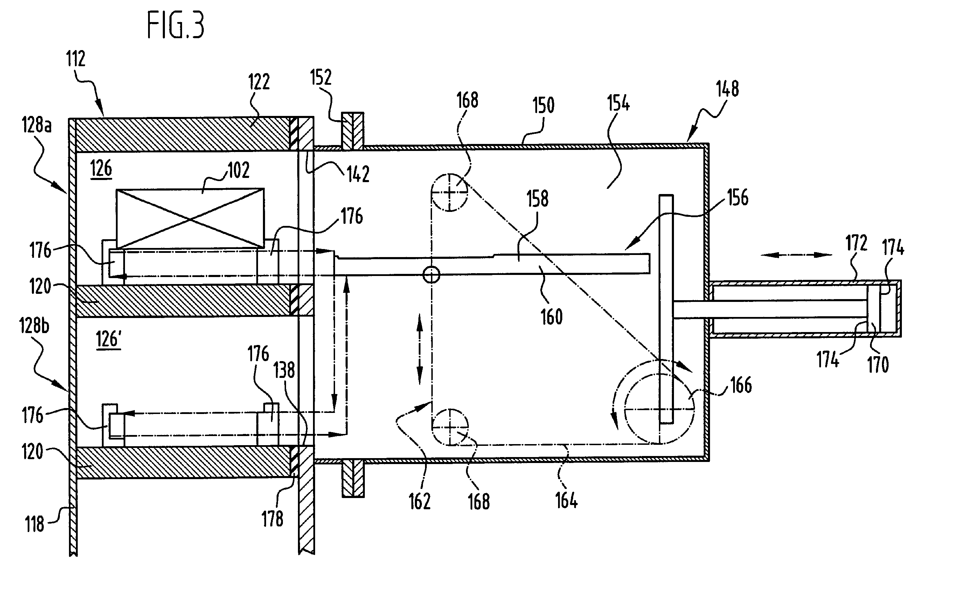

Um ein Werkstück 102 nach Durchlaufen einer Ebene 128 der Behandlungsvorrichtung 100 in eine darauffolgende Behandlungsebene übergeben zu können, umfaßt die Behandlungsvorrichtung 100 mehrere Übergabevorrichtungen 148, von denen eine schematisch in Fig. 3 dargestellt ist.

Die Übergabevorrichtung 148 umfaßt ein Gehäuse 150, das fluiddicht an einen Befestigungsflansch 152 des Gehäuses 104 der Behandlungsvorrichtung 100 angeflanscht ist.

Der Befestigungsflansch 152 umgibt einen Bereich der Gehäusewand 108, welcher die Austrittsöffnung 142 einer ersten Kammerebene 128a und eine Zutrittsöffnung 138 einer zweiten Kammerebene 128b umgibt, so daß durch den Befestigungsflansch 152, das Gehäuse 150 der Übergabevorrichtung 148 und die Gehäusewand 108 der Behandlungsvorrichtung 100 eine die Austrittsöffnung 142 fluiddicht mit der Zutrittsöffnung 138 verbindende geschlossene Kammer 154 gebildet wird.

Die Übergabevorrichtung 148 umfaßt ferner eine Bewegungsvorrichtung 156 für das Werkstück 102, welche innerhalb der Kammer 154 angeordnet ist.

Die Bewegungsvorrichtung 156 umfaßt eine bewegliche Werkstückaufnahme 158, beispielsweise in Form einer beweglichen Gabel 160, welche mittels eines Kettenzugs 162 in vertikaler Richtung verschiebbar ist.

Der Kettenzug 162 umfaßt beispielsweise eine Zugkette 164, die über ein angetriebenes Kettenrad 166 und zwei Umlenkkettenräder 168 geführt ist.

Der Kettenzug 162 mitsamt der Gabel 160 ist mittels eines Pneumatikkolbens 170 in radialer Richtung der Kammertrommel 112 verschiebbar.

Der Pneumatikkolben 170 ist in einem Pneumatikzylinder 172 verschieblich gehalten und kann an seinen beiden Stirnseiten 174 abwechselnd mit einem erhöhten Gasdruck beaufschlagt werden, um den Kettenzug 162 mit der darin angeordneten Gabel 160 zur Drehachse 114 der Kammertrommel 112 hin bzw. von der Drehachse 114 weg zu bewegen.

Das von der Kammerebene 128a zu der Kammerebene 128b zu übergebende Werkstück 102 liegt in der Aufnahmekammer 126 der Kammerebene 128a auf Abstandshaltern 176 auf, die sich am Boden der Aufnahmekammer 126 abstützen.

Zur Aufnahme des Werkstücks 102 wird die Gabel 160 mittels des Kettenzugs 162 auf die Höhe der Kammerebene 128a angehoben.

Anschließend wird die Gabel 160 mittels des Pneumatikkolbens 170 zwischen den Abstandshaltern 176 hindurch unter das Werkstück 102 geschoben.

Mittels des Kettenzugs 162 wird darauf die Gabel 160 etwas angehoben, so daß das Werkstück 102 nunmehr auf der Gabel 160 aufliegt und von den Abstandshaltern 176 der Aufnahmekammer 126 abgehoben ist.

Nun wird die Gabel 160 mit dem Werkstück 102 mittels des Pneumatikkolbens 170 aus der Aufnahmekammer 126 der Kammerebene 128a herausgezogen und mittels des Kettenzugs 162 auf die Einfahrhöhe der Kammerebene 128b abgesenkt.

Anschließend wird die Gabel 160 mit dem Werkstück 102 mittels des Pneumatikkolbens 170 in eine Aufnahmekammer 126' der Kammerebene 128b eingeschoben.

Durch Absenken der Gabel 160 mittels des Kettenzugs 162 wird das Werkstück 102 auf den Abstandshaltern 176 am Boden der Aufnahmekammer 126' abgelegt.

Anschließend zieht der Pneumatikkolben 170 die Gabel 160 wieder vollständig aus der Aufnahmekammer 126' heraus, und die Gabel 160 wird mittels des Kettenzugs 162 auf das Niveau der Kammerebene 128a angehoben, um das nächste Werkstück 102 aus der Kammerebene 128a zu erwarten und zu übernehmen.

Da die Übergabevorrichtung 148 gekapselt ist, kann auch ein eventuell in der Kammerebene 128a zugeführtes Behandlungsmedium durch die Kammer 154 der Übergabevorrichtung 148 weiter in die Kammerebene 128b strömen.

Ferner findet auch ein Druckausgleich zwischen den Aufnahmekammern der Kammerebene 128a und der Kammerebene 128b statt, so daß insbesondere ein in der Kammerebene 128a erzeugtes Vakuum in der Kammerebene 128b erhalten bleibt.

Nach der Übergabe eines Werkstücks 102 von einer Kammerebene 128a auf die darauffolgende Kammerebene 128b wird das betreffende Werkstück 102 in der Kammerebene 128b durch Drehung der Kammertrommel 112, um einen Winkel von weniger als 360 Grad um die Drehachse 114, bis zu der Austrittsöffnung 142 der Kammerebene 128b gefördert.

Während des Durchlaufens dieser Ebene der Behandlungsvorrichtung 100 kann das Werkstück 102 in der Aufnahmekammer 126' weiteren verfahrenstechnischen Behandlungen unterzogen werden.

Bei Erreichen der Austrittsöffnung 142 der Kammerebene 128b wird das Werkstück 102 mittels einer weiteren Übergabevorrichtung 148, die entsprechend der vorstehend erläuterten Übergabevorrichtung 148 ausgebildet sein kann, zu der Zutrittsöffnung 138 einer weiteren Kammerebene 128 übergeben oder, falls es sich bei der Kammerebene 128b um die letzte von dem Werkstück 102 zu durchlaufende Ebene handelt, aus der Behandlungsvorrichtung 100 entnommen.

Im vorstehend beschriebenen Ausführungsbeispiel werden die Ebenen der Behandlungsvorrichtung 100 von oben nach unten durchlaufen. Ebensogut wäre es jedoch auch möglich, die Werkstücke 102 zunächst in die unterste Kammerebene 128f einzubringen und die Werkstücke 102 dann von unten nach oben durch die Behandlungsvorrichtung 100 bis zu der obersten Kammerebene 128a zu fördern und sie aus dieser Ebene wieder der Behandlungsvorrichtung 100 zu entnehmen.

Insbesondere dann, wenn in der Behandlungsvorrichtung 100 flüssige oder gasförmige Behandlungsmedien eingesetzt werden und/oder wenn innerhalb der Behandlungsvorrichtung 100 ein Vakuum erzeugt wird, ist es erforderlich, daß sich zwischen der äußeren Oberfläche der Kammertrommel 112 und der Innenfläche der Gehäusewand 108 eine Flächendichtung 178 befindet, die verhindert, daß ein flüssiges oder gasförmiges Medium von einer Aufnahmekammer 126 in vertikal oder horizontal benachbarte Aufnahmekammern 126 oder in die Umgebung abfließt.

Diese Flächendichtung 178 ist an der Umfangsfläche der Kammertrommel 112 drehfest angeordnet und bewegt sich zusammen mit der Kammertrommel 112 durch den Innenraum des Gehäuses 104 der Behandlungsvorrichtung 100.

Die Flächendichtung 178 ist als eine einstückige Wickelfoliendichtung ausgebildet.

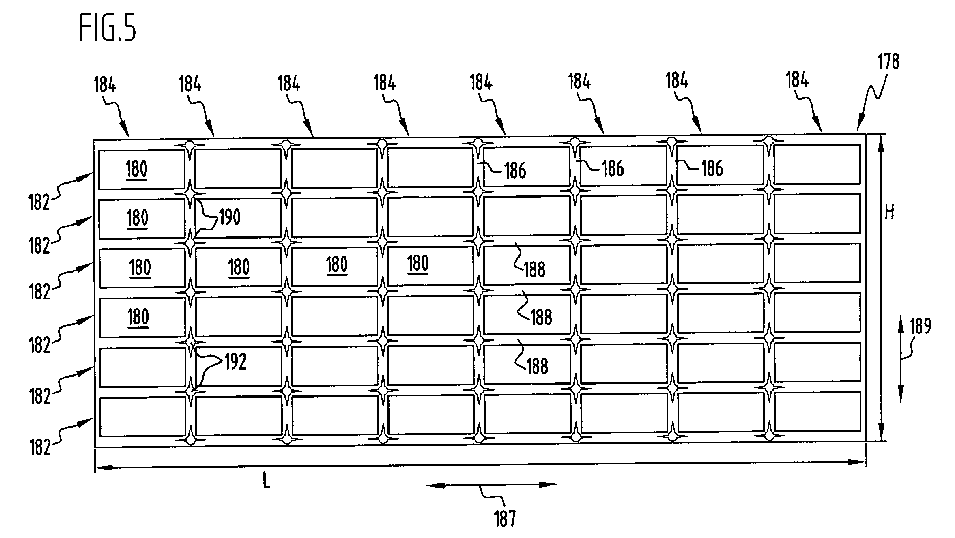

Eine Abwicklung der auf die Kammertrommel 112 aufgezogenen Flächendichtung 178 in einem kalten Montagezustand (bei Raumtemperatur) ist in Fig. 5 dargestellt.

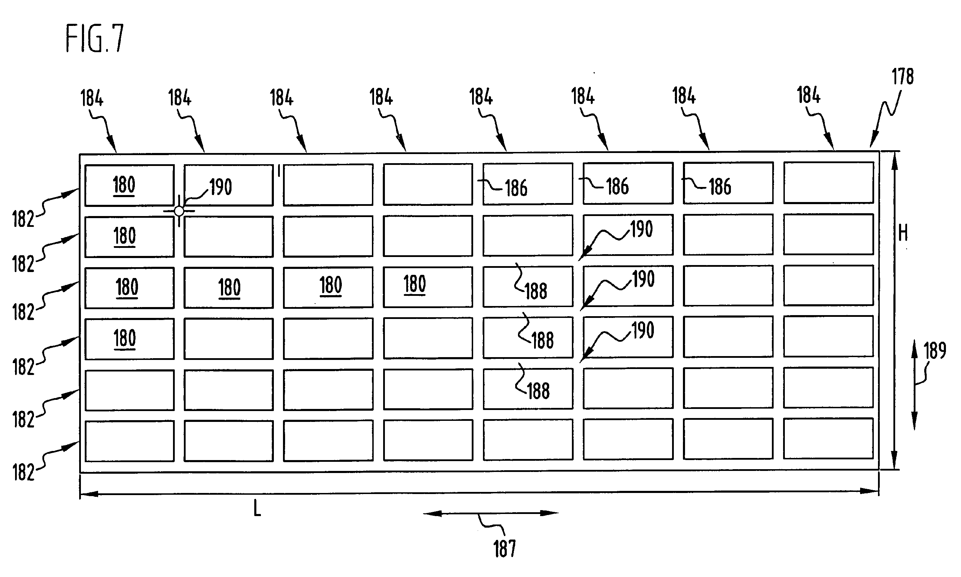

Eine Abwicklung der Flächendichtung 178 in einem warmen Betriebszustand (bei einer Betriebstemperatur von beispielsweise 120° C) ist in Fig. 7 dargestellt.

Die Flächendichtung 178 ist als eine Folie aus einem Dichtungsmaterial hergestellt, welches aus einem Fluorpolymer-Kunststoff oder aus einem Fluorpolymer-Compound hergestellt ist. Insbesondere kann die Flächendichtung 178 aus einer Polytetrafluorethylen (PTFE)-Folie gebildet sein.

Wie aus den Fig. 5 und 7 zu ersehen ist, ist die Flächendichtung 178 mit im wesentlichen rechteckigen Durchtrittsöffnungen 180 versehen, welche im auf der Kammertrommel 112 angeordneten Zustand der Flächendichtung 178 jeweils mit einer Mündungsöffnung 140 einer Aufnahmekammer 126 im wesentlichen deckungsgleich sind.

Folglich sind die Durchtrittsöffnungen 180 in einem regelmäßigen Gitter angeordnet, wobei die Anzahl der übereinanderliegenden Reihen 182 der Anzahl der Kammerebenen 128 der Behandlungsvorrichtung 100 und die Anzahl der Spalten 184 des Gitters der Anzahl der Aufnahmekammern 126 pro Kammerebene 128 entspricht.

Die Durchtrittsöffnungen 180 der Flächendichtungen 178 sind durch vertikale Stege 186 und durch horizontale Stege 188 voneinander getrennt, wobei sich die horizontalen Stege 188 und die vertikalen Stege 186 in ungefähr quadratischen Kreuzungsbereichen 190 schneiden.

Im montierten Zustand der Flächendichtung 178 erstrecken sich die horizontalen Stege 188 längs der Umfangsrichtung 187 der Kammertrommel 112 und die vertikalen Stege 186 längs der Axialrichtung 189 der Kammertrommel 112.

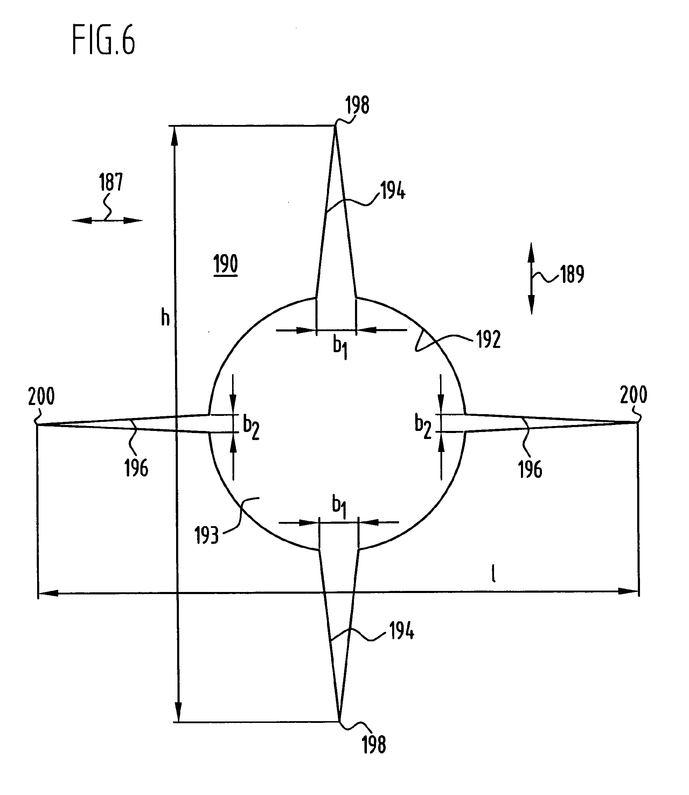

Wie am besten aus den Fig. 5 und 6 zu ersehen ist, ist die Flächendichtung 178 in jedem Kreuzungsbereich 190 mit jeweils einer Ausgleichsausnehmung 192 versehen, die einen im wesentlichen kreisförmigen mittigen Bereich 193 umfaßt, von welchem sich zwei vertikale Ausgleichsbereiche 194, die die Form vertikaler Schlitze aufweisen, nach oben bzw. nach unten und von welchem sich zwei horizontale Ausgleichsbereiche 196, welche die Form horizontaler Schlitze aufweisen, nach links bzw. nach rechts erstrecken.

Die Durchtrittsöffnungen 180 und die Ausgleichsausnehmungen 192 sind durch ein geeignetes Trennverfahren aus einer im wesentlichen ebenen Folie des Dichtungsmaterials, beispielsweise durch Ausstanzen oder Ausschneiden, herausgetrennt.

Bei einem konkreten Ausführungsbeispiel beträgt die Dicke der Flächendichtung 178 ungefähr 5 mm. Die Höhe der Kammertrommel 112 und damit die Höhe H der Flächendichtung 178 beträgt beispielsweise ungefähr 1.000 mm. Der Durchmesser der Kammertrommel 112 beträgt beispielsweise ungefähr 800 mm, so daß der Umfang der Kammertrommel 112 und somit die Länge L der Flächendichtung 178 ungefähr 2.513 mm beträgt. Ferner sind in dem Ausführungsbeispiel sechs Kammerebenen 128 und acht Aufnahmekammern 126 pro Kammerebene 128 vorgesehen, so daß die Breite der vertikalen Stege 186 und der horizontalen Stege 188 jeweils ungefähr 30 mm beträgt.

Die horizontale Ausdehnung I und die vertikale Ausdehnung h der Ausgleichsausnehmungen 192 ist vorzugsweise größer als die Breite der vertikalen Stege 186 bzw. der horizontalen Stege 188.

In einem konkreten Ausführungsbeispiel beträgt die vertikale Ausdehnung h der Ausgleichsausnehmungen 192 beispielsweise ungefähr 40 mm. In demselben Ausführungsbeispiel beträgt die horizontale Ausdehnung I der Ausgleichsausnehmungen 192 beispielsweise ebenfalls ungefähr 40 mm.

Das Material der Flächendichtung 178 (beispielsweise PTFE oder ein PTFE-Compound) weist einen deutlich höheren Wärmeausdehnungskoeffizienten auf als das Material der Kammertrommel 112 (in der Regel ein metallisches Material, insbesondere ein Stahl). Bei der Erwärmung von Raumtemperatur auf eine Betriebstemperatur von beispielsweise ungefähr 120° C dehnt sich daher die Flächendichtung 178 um ungefähr 1 Prozent relativ zu der Umfangsfläche der Kammertrommel 112, bei dem vorstehend beschriebenen konkreten Ausführungsbeispiel also um ungefähr 25 mm in der Umfangsrichtung der Kammertrommel 112 und um ungefähr 10 mm in der Axialrichtung der Kammertrommel 112.

Dieser Unterschied in den Wärmedehnungen der Flächendichtung 178 einerseits und der Kammertrommel 112 andererseits wird durch die in den Kreuzungsbereichen 190 der Flächendichtung 178 vorgesehen Ausgleichsausnehmungen 192 ausgeglichen.

Wie aus den Fig. 5 und 6 zu ersehen ist, steht die auf die Kammertrommel 112 aufgezogene Flächendichtung 178 im Montagezustand (bei Raumtemperatur) unter einer mechanischen Vorspannung, aufgrund welcher die Ausgleichsbereiche 194, 196 der Ausgleichsausnehmungen 192 geweitet sind.

Insbesondere erweitern sich die vertikalen Ausgleichsbereiche 194 von ihrer punktförmigen Spitze 198 bis zu ihrer Mündung in den mittigen Bereich der Ausgleichsaufnehmung 192 bis auf eine Breite b₁ von beispielsweise ungefähr 3 mm. Die horizontalen Ausgleichsbereiche 196 erweitern sich im Montagezustand bei Raumtemperatur jeweils von ihrer Spitze 200 bis zu ihrer Mündung in den mitten Bereich 193 der Ausgleichsausnehmung 192 bis auf eine Breite b₂ von beispielsweise ungefähr 1,5 mm.

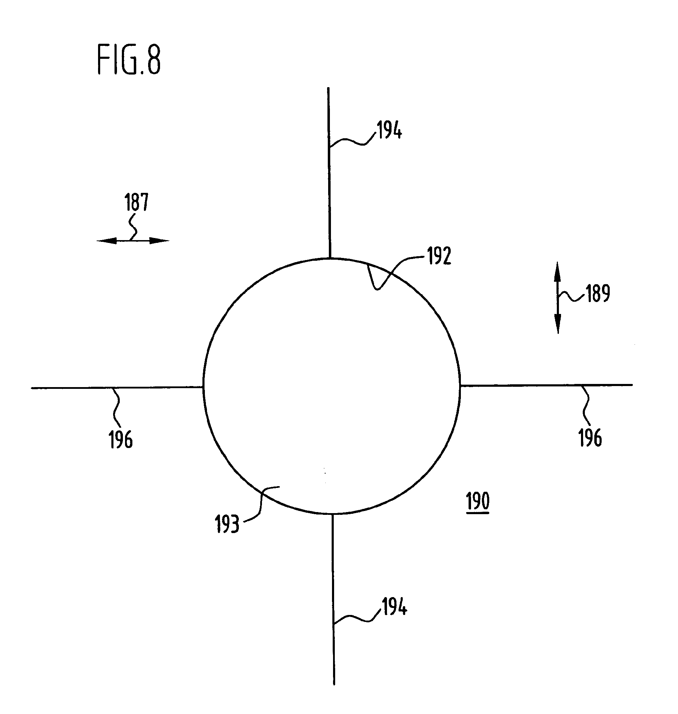

Durch die größere Wärmedehnung der Flächendichtung 178 relativ zu der Kammertrommel 112 bei der Erwärmung von Raumtemperatur auf die Betriebstemperatur von beispielsweise ungefähr 120° C nimmt die Breite der vertikalen Ausgleichsbereiche 194 und der horizontalen Ausgleichsbereiche 196 bei der Erwärmung der Kammertrommel 112 und der Flächendichtung 178 auf die Betriebstemperatur ab, bis die Breite b₁ der vertikalen Ausgleichsbereiche 194 und die Breite b₂ der horizontalen Ausgleichsbereiche 196 im Betriebszustand ungefähr gleich null ist (siehe Fig. 8).

Im Betriebszustand liegt somit die Flächendichtung 178 im wesentlichen spannungsfrei, insbesondere ohne in der Umfangsrichtung 187 der Kammertrommel 112 oder in der Axialrichtung 189 der Kammertrommel 112 wirkende Spannungen, an der Außenseite der Kammertrommel 112 an. Auf diese Weise kann die Flächendichtung 178 in einem großen Betriebstemperaturbereich ohne Ermüdungsgefahr eingesetzt werden.

Die Flächendichtung 178 kann bei der Herstellung der Behandlungsvorrichtung 100 oder bei einem nach einer gewissen Betriebsdauer erforderlich werdenden Austausch in einfacher Weise auf die Kammertrommel 112 aufgezogen werden.

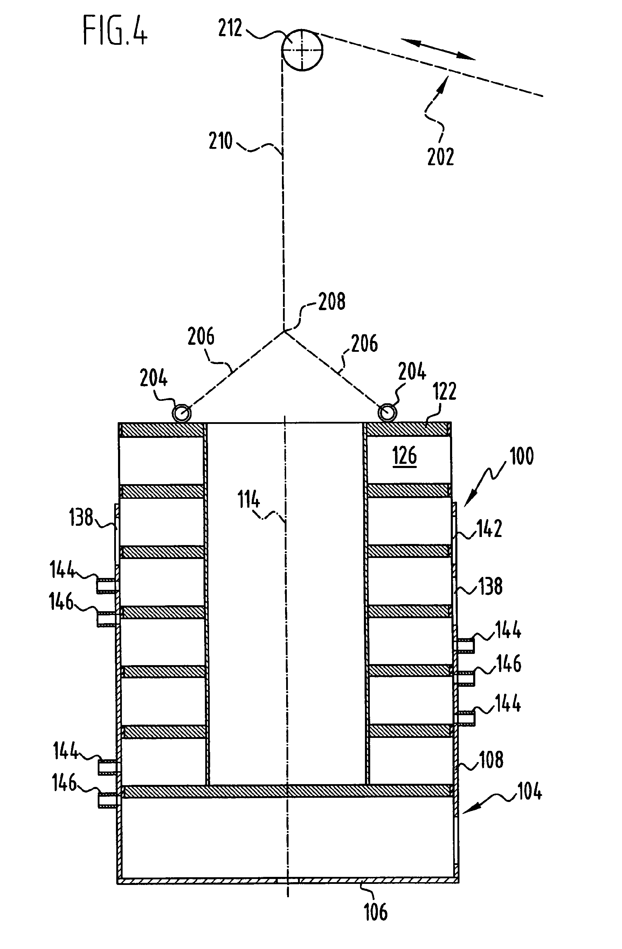

Hierfür wird zunächst die Kammertrommel 112, wie in Fig. 4 dargestellt, nach oben aus dem Gehäuse 104 der Behandlungsvorrichtung 100 herausgehoben.

Hierfür kann eine als Ganzes mit 202 bezeichnete Hebevorrichtung verwendet werden, welche mehrere an der Oberseite der Deckplatte 122 festgelegte Halteringe 204 umfaßt, durch welche jeweils ein Halteseil 206 gezogen ist. Die oberen Enden der Halteseile 206 sind an der Stelle 208 mit einem unteren Ende eines Tragseils 210 verbunden, welches über eine stationäre Umlenkrolle 212 geführt ist und mittels einer (nicht dargestellten) motorisch betriebenen Seilwinde anhebbar oder absenkbar ist, um die Kammertrommel 112 aus dem Gehäuse 104 herauszuheben bzw. die Kammertrommel 112 wieder abzusenken.

Die Flächendichtung 178 ist in ihren Abmessungen auf den warmen Betriebszustand ausgelegt, das heißt so ausgelegt, daß die vertikalen und horizontalen Schlitze der Ausgleichsausnehmungen 192 im warmen Betriebszustand geschlossen sind.

Die Flächendichtung 178 kann nun grundsätzlich bei der Betriebstemperatur auf die Kammertrommel 112 aufgezogen werden. Hierzu müssen jedoch die Kammertrommel 112 und die Flächendichtung 178 außerhalb des Gehäuses 104 der Behandlungsvorrichtung auf die Betriebstemperatur erwärmt werden, was - insbesondere im Falle des Austauschs einer Flächendichtung 178 im Zuge einer Wartung der Behandlungsvorrichtung 100 - gar nicht oder nur schwer möglich ist.

Alternativ hierzu kann die Flächendichtung 178 jedoch auch im kalten Zustand auf die kalte Kammertrommel 112 zunächst lose aufgelegt und dann sukzessive in der Umfangsrichtung 187 und in der Axialrichtung 189 der Kammertrommel 112 gedehnt werden.

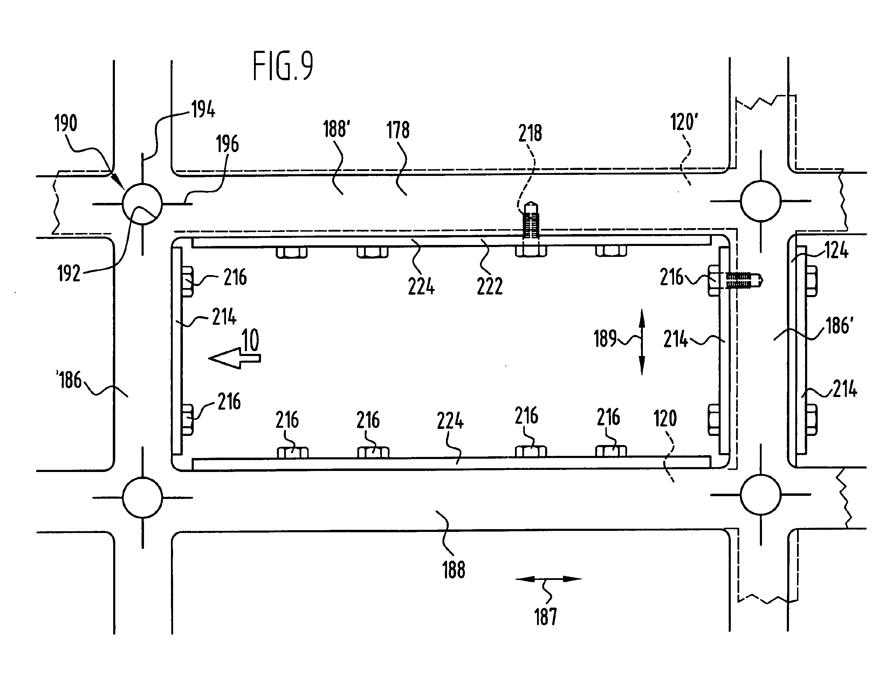

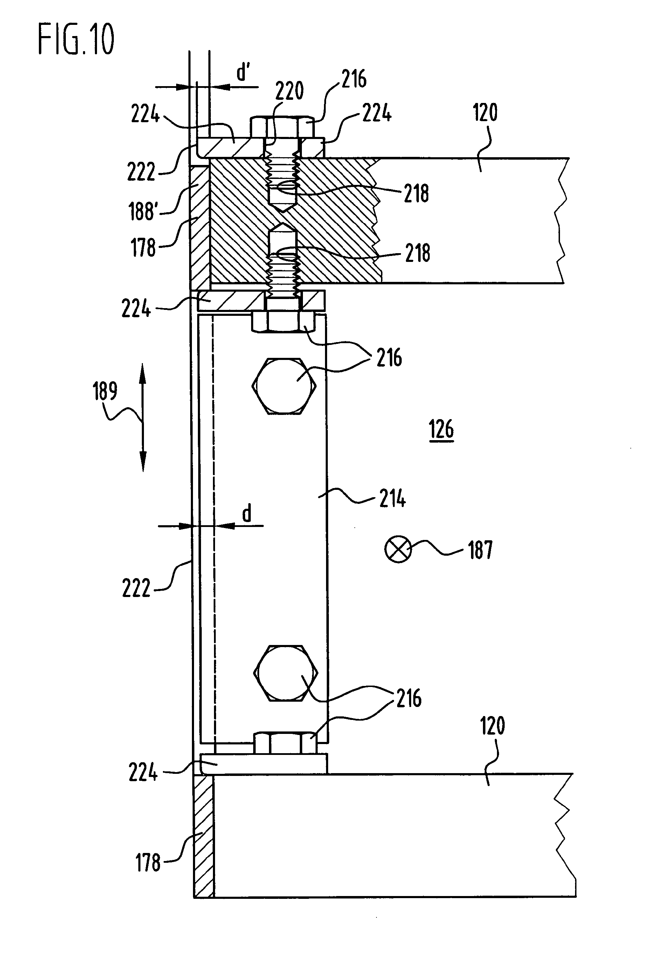

Die Dehnung der Flächendichtung 178 in der Umfangsrichtung 187 der Kammertrommel 112 erfolgt mittels vertikaler Mitnehmerbleche 214 (siehe Fig. 9), welche durch mehrere, beispielsweise jeweils zwei, Befestigungsschrauben 216, die mit ihren Schäften in vertikal von einander beabstandete Gewindesacklöcher 218 eingreifen und jeweils ein Durchtrittsloch 220 in dem vertikalen Mitnehmerblech 214 durchgreifen, an jeweils einer der Trennwände 124 der Kammertrommel 112, und zwar im Bereich der Mündungsöffnung 140 einer Aufnahmekammer 126, gehalten sind, wobei ein äußerer Rand 222 des jeweiligen Mitnehmerblechs 214 in radialer Richtung der Kammertrommel 112 um eine Strecke d, welche kleiner ist als die Dicke der Flächendichtung 178, beispielsweise um ungefähr 3 mm, über die betreffende Trennwand 124 nach außen übersteht (siehe Fig. 10).

Die erforderliche Dehnung der Flächendichtung 178 in der Axialrichtung 189 der Kammertrommel 112 erfolgt mittels horizontaler Mitnehmerbleche 224, die jeweils durch mehrere, beispielsweise jeweils vier, Befestigungsschrauben 216, die Durchtrittslöcher 220 in dem horizontalen Mitnehmerblech 224 durchsetzen und in Gewindesacklöcher 218 in der Bodenwand oder der Deckenwand einer Aufnahmekammer 126 eingedreht sind, an der betreffenden Bodenwand oder Deckenwand der Aufnahmekammer 126 gehalten sind, und zwar nahe der Mündungsöffnung 140 der Aufnahmekammer 126, wobei ein äußerer Rand 222 des horizontalen Mitnehmerblechs 224 in radialer Richtung der Kammertrommel 112 um eine Strecke d', die kleiner ist als die Dicke der Flächendichtung 178, beispielsweise um ungefähr 3 mm, über die betreffende Bodenplatte 120, 116 bzw. Deckplatte 122 der Kammertrommel 112 nach außen übersteht.

Bei Raumtemperatur ist die Länge L der Flächendichtung 178 (um beispielsweise 25 mm) kürzer als der Umfang der Kammertrommel 112 und die Höhe H der Flächendichtung (um beispielsweise 10 mm) geringer als die Höhe der Kammertrommel 112.

Im kalten Vormontage-Zustand der Flächendichtung, in dem die Flächendichtung 178 keinen äußeren Spannungen unterworfen ist, sind die Ausgleichsbereiche 194, 196 der Ausgleichsausnehmungen 192 der Flächendichtung 178 (ebenso wie im warmen Betriebszustand) geschlossen.

Zum Aufziehen der Flächendichtung 178 auf die Kammertrommel 112 wird die Flächendichtung 178 zunächst mit einem ihrer vertikalen Stege 186 auf eine Reihe untereinander angeordneter Trennwände 124 der Kammertrommel 112 aufgelegt und an diesem Steg 186 mittels der hierzu benachbarten vertikalen Mitnehmerbleche 214 an der Kammertrommel 112 befestigt, indem die Befestigungsschrauben 216 der betreffenden vertikalen Mitnehmerbleche 214 vollständig angezogen werden, bis die Mitnehmerbleche 214 an der betreffenden Trennwand 124 flächig anliegen.

Der Rest der Flächendichtung 178 wird zunächst nur locker um die Kammertrommel 112 gezogen, so daß ein Spalt von mindestens 25 mm Breite zwischen den Enden der Flächendichtung 178 verbleibt.

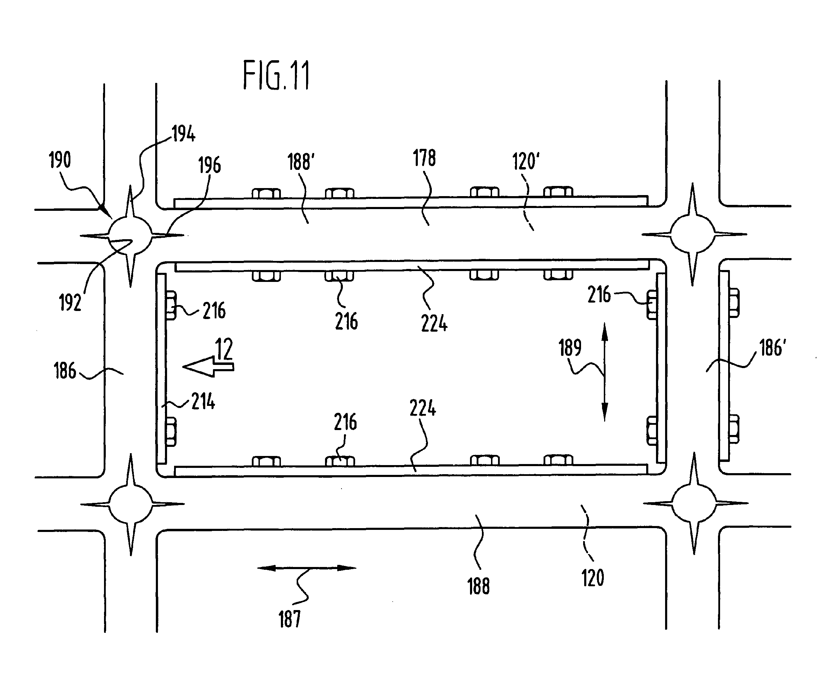

Ausgehend von dem ersten vertikalen Steg 186, mit dem die Flächendichtung 178 an der Kammertrommel 112 befestigt worden ist, wird die Flächendichtung 178 an ihrem in der Umfangsrichtung 187 der Kammertrommel 112 benachbarten vertikalen Steg 186' um die zu erwartende Wärmeausdehnung gedehnt, indem die Befestigungsschrauben 216 der vertikalen Mitnehmerbleche 214, welche an dem vertikalen Steg 186' anliegen und zunächst noch um ungefähr 4 mm aus der betreffenden Trennwand 124 herausstehen (siehe Fig. 9), vollständig angezogen werden (siehe Fig. 11), bis die jeweils zugeordneten vertikalen Mitnehmerbleche 214 flächig an der betreffenden Trennwand 124 anliegen. Dabei wird die Flächendichtung 178 an den vertikalen Ausgleichsbereichen 194 der an den Stegen 186 angeordneten Ausgleichsausnehmungen 192 auseinandergezogen und dadurch in der Umfangsrichtung 187 der Kammertrommel 112 gedehnt.

Da hierbei nur schmale, neben den vertikalen Ausgleichsbereichen 194 liegende Stegbereiche der Flächendichtung 178 leicht verformt werden, ist diese Dehnung der Flächendichtung 178 mit einem weit geringeren Kraftaufwand verbunden als dies der Fall wäre, wenn die gesamten vertikalen Stege 186 in ihrer gesamten Breite von beispielsweise ungefähr 30 mm aus ihrem Material heraus um den gleichen Betrag (von beispielsweise ungefähr 3mm) gedehnt werden müßten.

In der gleichen, vorstehend beschriebenen Weise wird die Flächendichtung 178 mit ihren in der Umfangsrichtung 187 der Kammertrommel 112 auf den vertikalen Steg 186' folgenden vertikalen Stegen an der Kammertrommel 112 befestigt.

Anschließend wird die Flächendichtung 178 sukzessive in der Axialrichtung 189 der Kammertrommel 112 gedehnt.

Hierzu wird die Flächendichtung 178 mit einem horizontalen Steg 188 an einer Bodenplatte 120 der Kammertrommel 112 befestigt, indem die Befestigungsschrauben 216 der benachbarten horizontalen Mitnehmerbleche 224 vollständig angezogen werden, bis die betreffenden horizontalen Mitnehmerbleche 224 flächig an der Oberseite bzw. an der Unterseite der betreffenden Bodenplatte 120 anliegen.

Anschließend wird die Flächendichtung 178 in der Axialrichtung 189 der Kammertrommel 112 gedehnt, indem ein dem ersten horizontalen Steg 188 in vertikaler Richtung benachbarter horizontaler Steg 188' an einer vertikal benachbarten Bodenplatte 120' befestigt wird, und zwar durch vollständiges Anziehen der Befestigungsschrauben 216 der an dem horizontalen Steg 188' anliegenden horizontalen Mitnehmerbleche 224, bis auch diese Mitnehmerbleche 224 flächig an der Unterseite bzw. an der Oberseite der Bodenplatte 120' anliegen.

Dabei wird die Flächendichtung 178 an den horizontalen Ausgleichsbereichen 196 der Ausgleichsausnehmungen 192, welche im Bereich des horizontalen Steges 188 angeordnet sind, auseinandergezogen, wodurch die Flächendichtung 178 um die zu erwartende Wärmeausdehnung in der Axialrichtung 189 der Kammertrommel 112 gedehnt wird.

Die Dehnung der Flächendichtung 178 in der Axialrichtung 189 wird dann fortgesetzt, indem die Flächendichtung 178 mit einem weiteren, auf den Steg 188' in der Axialrichtung 189 folgenden horizontalen Steg an einer weiteren Bodenplatte 120 oder an der Deckplatte 122 oder an der Trommelbodenplatte 116 der Kammertrommel 112 festgelegt wird.

Wenn alle vertikalen Stege 186 und alle horizontalen Stege 188 der Flächendichtung 178 mittels der Mitnehmerbleche 214, 224 an der Kammertrommel 112 festgelegt und somit die Flächendichtung 178 vollständig auf die Kammertrommel 112 aufgespannt ist, ist die Montage der Flächendichtung 178 an der Kammertrommel 112 beendet.

Anschließend kann die Kammertrommel 112 mittels der Hebevorrichtung 202 wieder in das Gehäuse 104 der Behandlungsvorrichtung 100 eingesetzt werden.

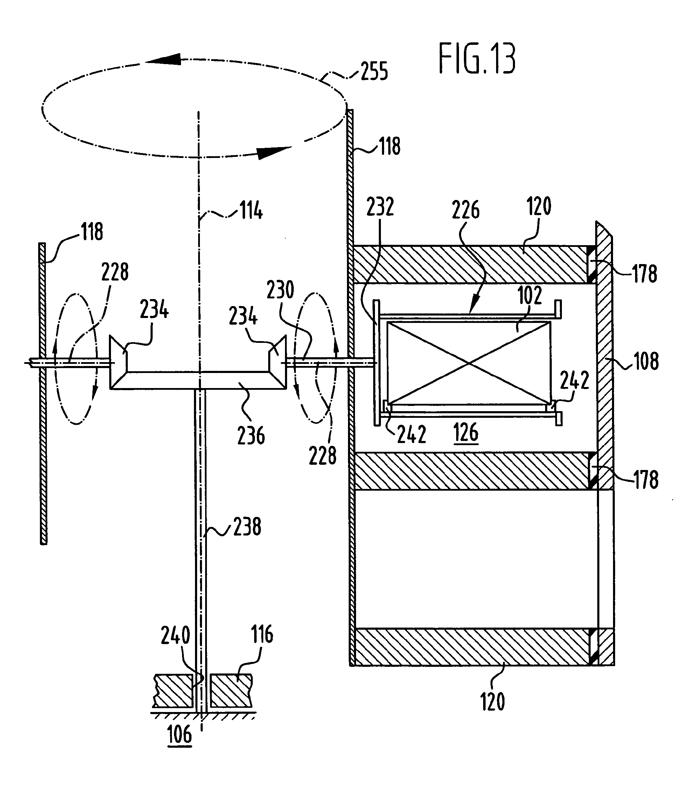

Bei einer in Fig. 13 dargestellten zweiten Ausführungsform der Behandlungsvorrichtung 100 sind die die Behandlungsvorrichtung 100 durchlaufenden Werkstücke 102 in zumindest einer Aufnahmekammer 126 nicht auf stationären Abstandshaltern 176 abgelegt, sondern in einer Werkstückhalterung 226 aufgenommen, welche um eine radial zur Drehachse 114 der Kammertrommel 112 ausgerichtete Drehachse 228 drehbar ist.

Die Drehung um die Drehachse 228 erfolgt dabei mittels einer Drehwelle 230, welche an einer radial inneren Stirnwand 232 der Werkstückhalterung 226 festgelegt ist und an der Hohlwelle 118 der Kammertrommel 112 drehbar gelagert ist.

Ein innerhalb der Hohlwelle 118 liegendes Ende der Drehwelle 230 ist mit einem Kegelrad 234 versehen, das in Eingriff mit einem stationären zentralen Kegelrad 236 steht, welches koaxial zu der Drehachse 114 der Kammertrommel 112 ausgerichtet ist und über ein vertikales Halterohr 238, das eine Durchtrittsbohrung 240 in der Trommelbodenplatte 116 durchsetzt, mit der Oberseite der Bodenplatte 106 des Gehäuses 104 der Behandlungsvorrichtung 100 verbunden ist.

Bei einer Drehbewegung der Hohlwelle 118 um die Drehachse 114 der Kammertrommel 112 dreht sich folglich das mit dem stationären zentralen Kegelrad 236 kämmende Kegelrad 234 und damit die Werkstückhalterung 226 mit dem darin aufgenommen Werkstück 102 um die horizontale Drechachse 228.

Um das Werkstück 102 mittels einer Übergabevorrichtung 148 aus der Werkstückhalterung 226 entnehmen zu können, sind an der Werkstückhalterung 226 mehrere Abstandshalter 242 vorgesehen, so daß eine bewegliche Werkstückaufnahme 158 der Übergabevorrichtung 148, beispielsweise eine bewegliche Gabel 160, in den Raum zwischen dem Werkstück 102 und einer Wandung der Werkstückhalterung 226 hinein bewegt werden kann, um das Werkstück 202 von den Abstandshaltern 242 abzuheben und aus der Werkstückhalterung 226 herauszubewegen.

Um die Rotationsgeschwindigkeit der Werkstückhalterungen 226 in den Aufnahmekammern 126 von der Rotationsgeschwindigkeit der Kammertrommel 112 um die Drehachse 114 zu entkoppeln, kann auch vorgesehen sein, daß das zentrale Kegelrad 236, das mit der Drehachse 114 koaxial ausgebildet ist, nicht feststeht, sondern relativ zu dem Gehäuse 104 drehbar gelagert ist und einen eigenen Drehantrieb aufweist.

Im übrigen stimmt die zweite Ausführungsform einer Behandlungsvorrichtung 100 hinsichtlich Aufbau und Funktion mit der ersten Ausführungsform überein, auf deren vorstehende Beschreibung insoweit Bezug genommen wird.

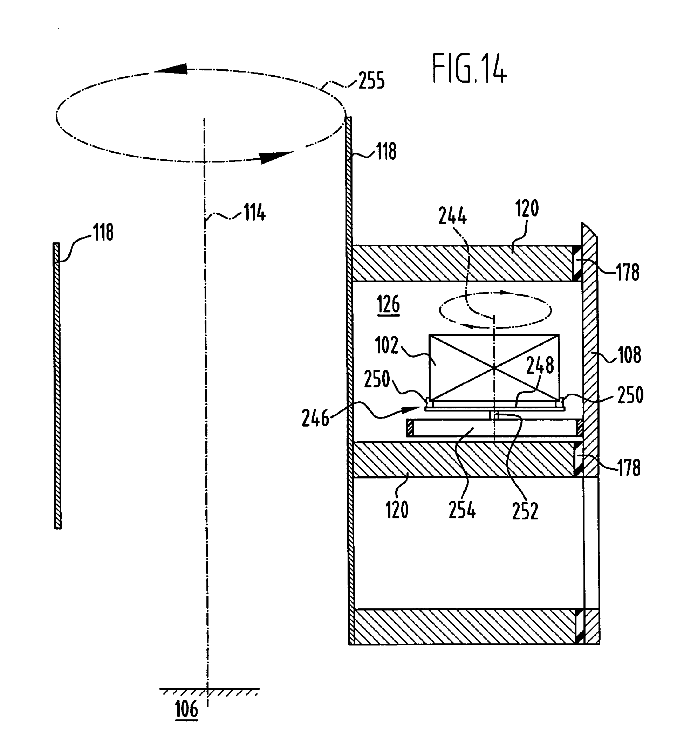

Eine in Fig. 14 dargestellte dritte Ausführungsform einer Behandlungsvorrichtung 100 unterscheidet sich von der ersten Ausführungsform dadurch, daß die Werkstücke 102 in mindestens einer Aufnahmekammer 126 der Kammertrommel 112 nicht auf stationären Abstandshaltern 176 ruhen, sondern in einer um eine parallel zur Drehachse 114 der Kammertrommel 112 ausgerichtete Drehachse 244 drehbaren Werkstückhalterung 246 gehalten sind.

Die Werkstückhalterung 246 umfaßt eine Drehscheibe 248, an deren Oberseite Abstandshalter 250 angeordnet sind, auf welchen das jeweilige Werkstück 102 aufliegt.

Die Unterseite der Drehscheibe 248 ist über eine koaxial zur Drehachse 244 ausgerichtete und (mittels nicht dargestellter Lager) an dem Boden der Aufnahmekammer 126 drehbar gelagerte Drehwelle 252 mit einem Reibrad 254 verbunden, dessen Umfangsfläche mit der Innenfläche der Gehäusewand 108 des Gehäuses 104 der Behandlungsvorrichtung 100 in Kontakt steht.

Bei einer Drehbewegung der Kammertrommel 112 um die Drehachse 114 rollt das Reibrad 254 an der Innenfläche der Gehäusewand 108 aufgrund des Reibschlusses zwischen dem Reibrad 254 und der Gehäusewand 108 ab, wodurch das Reibrad 254 und somit die Werkstückhalterung 246 in eine Drehbewegung um die Drehachse 244 versetzt werden.

Die Abstandshalter 250 der Werkstückhalterung 246 ermöglichen es, daß eine bewegliche Werkstückaufnahme 158 einer Übergabevorrichtung 148 zwischen die Drehscheibe 248 und das Werkstück 102 bewegt werden kann, um das Werkstück 102 von den Abstandshaltern 250 abzuheben und anschließend aus der Aufnahmekammer 126 herauszubewegen.

Im übrigen stimmt die dritte Ausführungsform einer Behandlungsvorrichtung 100 hinsichtlich Aufbau und Funktion mit der ersten Ausführungsfunktion überein, auf deren vorstehende Beschreibung insoweit Bezug genommen wird.

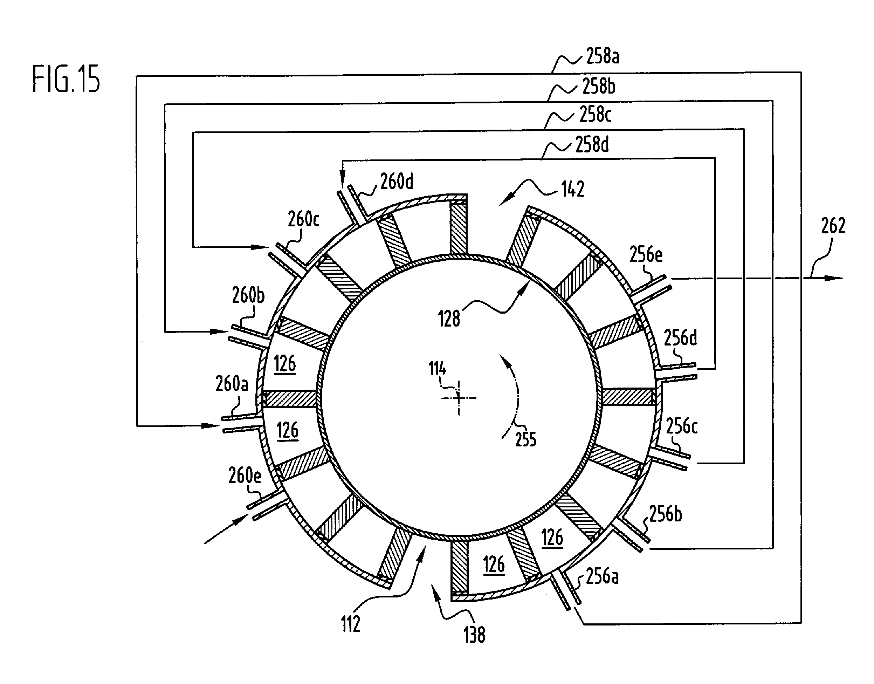

Bei einer in Fig. 15 dargestellten vierten Ausführungsform einer Behandlungsvorrichtung 100 hat zumindest eine Ebene der Behandlungsvorrichtung 100 die Funktion einer Vakuumschleuse.

In dem in Fig. 15 dargestellten Ausführungsbeispiel ist die betreffende Kammerebene 128 mit 16 Aufnahmekammern 126 versehen, welche aufgrund der Drehbewegung der Kammertrommel 112 um die Drehachse 114 von der Zutrittsöffnung 138 der Kammerebene 128, durch welche die Kammerebene 128 mit der umgebenden Atmosphäre in Verbindung steht und durch welche die Werkstücke 102 in die Kammerebene 128 eingebracht werden, zu der in einem Winkelabstand von 180 Grad der Zutrittsöffnung 138 gegenüberliegenden Austrittsöffnung 142 der Kammerebene 128 bewegt werden, an welcher der Vakuumenddruck der Kammerebene 128 erreicht ist und über welche die Kammerebene 128 mit einer nachfolgenden, ebenfalls zumindest teilweise unter Vakuum stehenden Kammerebene 128 verbunden ist.

Aufgrund der Drehbewegung der Kammertrommel 112 werden die Aufnahmekammern 126 - nach Entnahme der Werkstücke 102 durch die Austrittsöffnung 142 - im leeren Zustand zu der Zutrittsöffnung 138 zurückbewegt.

Auf dieser Ebene wandert jede Aufnahmekammer 126 also stets von einem Bereich mit hohem Druck (Zutrittsöffnung 138) zu einem Bereich mit dem Vakuumenddruck (Austrittsöffnung 142) und wieder zurück.

Bei der in Fig. 15 dargestellten Vakuumschleuse wird das Vakuum stufenweise erzeugt, indem jeweils eine leere Aufnahmekammer 126, in der noch Vakuum ist, mit einer mit einem Werkstück 102 bestückten Aufnahmekammer, in welcher der Vakuumenddruck noch nicht erreicht ist, gastechnisch kurzgeschlossen wird.

Zu diesem Zweck ist die Gehäusewand 108 in einem (in der Drehrichtung 255 gesehen) auf die Zutrittsöffnung 138 folgenden Bereich mit einem ersten Luftabführstutzen 256a versehen, welcher über eine erste Kurzschlußleitung 258a mit einem ersten Luftzuführstutzen 260a verbunden ist, welcher an der Gehäusewand 108 (in der Drehrichtung 255 gesehen) nach der Austrittsöffnung 142 und vor der Zutrittsöffnung 138 angeordnet ist.

Ein (in der Drehrichtung 255 gesehen) nach dem ersten Luftabführstutzen 256a angeordneter zweiter Luftabführstutzen 256b ist über eine zweite Kurzschlußleitung 258b mit einem (in der Drehrichtung 255 gesehen) vor dem ersten Luftzuführstutzen 260a angeordneten zweiten Luftzuführstutzen 260b verbunden.

Ein (in der Drehrichtung 255 gesehen) nach dem zweiten Luftabführstutzen 256b angeordneter dritter Luftabführstutzen 256c ist über eine dritte Kurzschlußleitung 258c mit einem (in der Drehrichtung 255 gesehen) vor dem zweiten Luftzuführstutzen 260b angeordneten dritten Luftzuführstutzen 260c verbunden.

Ein (in der Drehrichtung 255 gesehen) nach dem dritten Luftabführstutzen 256c angeordneter vierter Luftabführstutzen 256d ist über eine vierte Kurzschlußleitung 258d mit einer (in der Drehrichtung 255 gesehen) vor dem dritten Luftzuführstutzen 260c angeordneten vierten Luftzuführstutzen 260d verbunden.

Zwischen dem vierten Luftabführstutzen 256d und der Austrittsöffnung 142 der Kammerebene 128 ist ein fünfter Luftabführstutzen 256e angeordnet, welcher über eine Absaugleitung 262 mit einer (nicht dargestellten) Vakuumpumpe verbunden ist.

Ein zwischen dem ersten Luftzuführstutzen 260a und der Zutrittsöffnung 138 der Kammerebene 128 angeordneter fünfter Luftzuführstutzen 260e mündet in die umgebende Atmosphäre, so daß die jeweils im Bereich des fünften Luftzuführstutzens 260e befindliche Aufnahmekammer 126 durch den fünften Luftzuführstutzen 260e bis auf Atmosphärendruck belüftbar ist.

Bei der vorstehend beschriebenen, als Vakuumschleuse dienenden Kammerebene 128 wird somit insgesamt viermal ein Kurzschluß zwischen einer noch nicht vollständig evakuierten Aufnahmekammer 126, die sich auf dem Weg von der Zutrittsöffnung 138 zu der Austrittsöffnung 142 befindet, und einer noch nicht vollständig belüfteten Aufnahmekammer 126, welche sich auf dem Weg von der Austrittsöffnung 142 zurück zu der Zutrittsöffnung 138 befindet, durchgeführt.

Ausgehend von einem Atmosphärendruck von beispielsweise 1.000 mbar und einem angestrebten Vakuumenddruck von beispielsweise 10 mbar beträgt der Kammerdruck nach dem Druckausgleich durch die erste Kurzschlußleitung 258a noch beispielsweise ungefähr 800 mbar, nach dem Druckausgleich durch die zweite Kurzschlußleitung 258b noch beispielsweise ungefähr 600 mbar, nach dem Druckausgleich durch die dritte Kurzschlußleitung 258c noch beispielsweise ungefähr 400 mbar und nach dem Druckausgleich durch die vierte Kurzschlußleitung 258d noch beispielsweise ungefähr 200 mbar.

Die Vakuumpumpe muß die im Bereich des fünften Luftabführstutzens 256e befindliche Aufnahmekammer 126 also nur noch von ungefähr 200 mbar auf den angestrebten Vakuumenddruck von 10 mbar abpumpen.

Durch die mehrstufige Evakuierung hat die Vakuumpumpe somit deutlich weniger Gas aus den Aufnahmekammern 126 abzupumpen.

Außerdem steht für die Erzeugung des Vakuums in einer Aufnahmekammer 126 ein deutlich verlängerter Zeitraum (bei Verwendung von 16 Kammern in der als Vakuumschleuse dienenden Kammerebene 128 beispielsweise die fünffache Werkstückfolgezeit) für die Vakuumerzeugung zur Verfügung.

Ferner ist auch die Druckdifferenz und damit die Leckrate über die Flächendichtung 178 zwischen in der Umfangsrichtung 187 der Kammertrommel 112 aufeinanderfolgenden Aufnahmekammern 126 durch die mehrstufige Evakuierung verringert.

Im übrigen stimmt die vierte Ausführungsform einer Behandlungsvorrichtung 100 hinsichtlich Aufbau und Funktion mit der ersten Ausführungsform überein, auf deren vorstehende Beschreibung insoweit Bezug genommen wird.

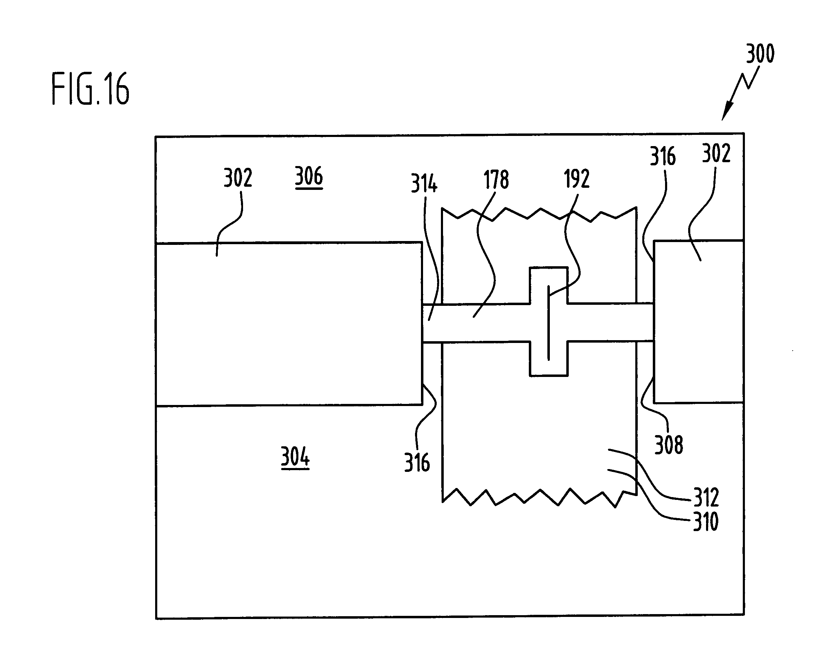

Eine weitere Ausführungsform einer Vorrichtung 300 mit einer Flächendichtung 178, die Ausgleichsausnehmungen 192 zur Wärmedehnungskompensation aufweist, ist in den Fig. 16 bis 18 dargestellt.

Die Vorrichtung 300 umfaßt eine stationäre Trennwand 302, welche einen ersten Raum 304, der mit einem ersten Medium, beispielsweise Öl, gefüllt ist, von einem zweiten Raum 306, der mit einem zweiten Medium, beispielsweise Luft, gefüllt ist, trennt.

Die Trennwand 102 ist mit einer Durchtrittsöffnung 308 versehen, durch welche sich eine um ihre Längsachse drehbare Welle 310 von dem ersten Raum 304 in den zweiten Raum 306 erstreckt.

Um die Medien, mit denen der erste Raum 304 bzw. der zweite Raum 306 gefüllt sind, voneinander getrennt zu halten, ist die Welle 310 im Bereich der Durchtrittsöffnung 308 an ihrer zylindrischen Mantelfläche 312 mit einer ringförmigen Flächendichtung 178 versehen, welche mit ihrer der Welle 310 abgewandten Außenfläche 314 an den Begrenzungsflächen 316 der Durchtrittsöffnung 308 anliegt und an diesen Begrenzungsflächen 316 abgleitet, wenn die Welle 310 sich dreht.

Die Welle 310 besteht aus einem metallischen Material, und die ringförmige Flächendichtung 178 ist aus einem Fluorpolymer oder aus einem Fluorpolymer-Compound gebildet, welches einen höheren Wärmedehnungskoeffizienten aufweist als das metallische Material der Welle 310.

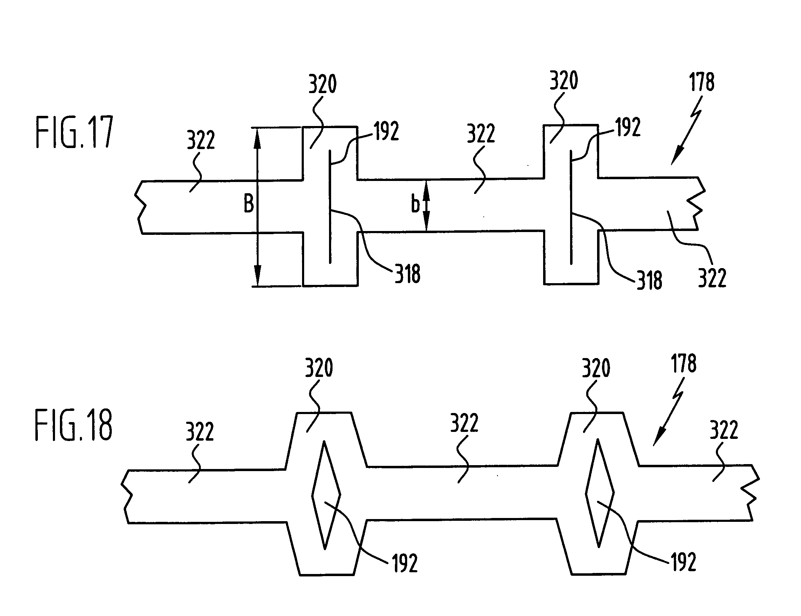

Um die unterschiedliche Wärmedehnung des Materials der Welle 310 und des Materials der Flächendichtung 178 längs der Umfangsrichtung der Welle 310 beim Wechsel von dem kalten Montagezustand (siehe Fig. 18) in einen warmen Betriebszustand (siehe Fig. 17) ausgleichen zu können, ist die Flächendichtung 178 mit mehreren Ausgleichsausnehmungen 192 versehen, die im warmen Betriebszustand die Form von sich in axialer Richtung der Welle 310 erstreckenden Schlitzen 318 aufweisen. Diese Ausgleichsausnehmungen 192 sind in Kompensationsbereichen 320 der Flächendichtung 178 angeordnet, welche längs des Umfangs der Flächendichtung 178 voneinander beabstandet und durch Verbindungsstege 322 miteinander verbunden sind.

Dabei ist die Breite B, das heißt die axiale Ausdehnung, der Kompensationsbereiche 320 mehr als doppelt so groß wie die Breite b, das heißt die axiale Ausdehnung, der dazwischenliegenden Verbindungsstege 322.

Beim Abkühlen von der hohen Betriebstemperatur (siehe Fig. 17) auf die niedrigere Montagetemperatur (siehe Fig. 18) erweitern sich die Ausgleichsausnehmungen 192 in der Umfangsrichtung der Flächendichtung 178 und der Welle 310 aufgrund der Zugspannungen, die von den Verbindungsstegen 322 auf die Kompensationsbereiche 320 der Flächendichtung 178 ausgeübt werden, da das Material der Flächendichtung 178 sich bei dieser Temperaturabnahme stärker zusammenzieht als das Material der Welle 310. Im kalten Montagezustand sind die Ausgleichsausnehmungen 192 daher im wesentlichen rautenförmig ausgebildet.

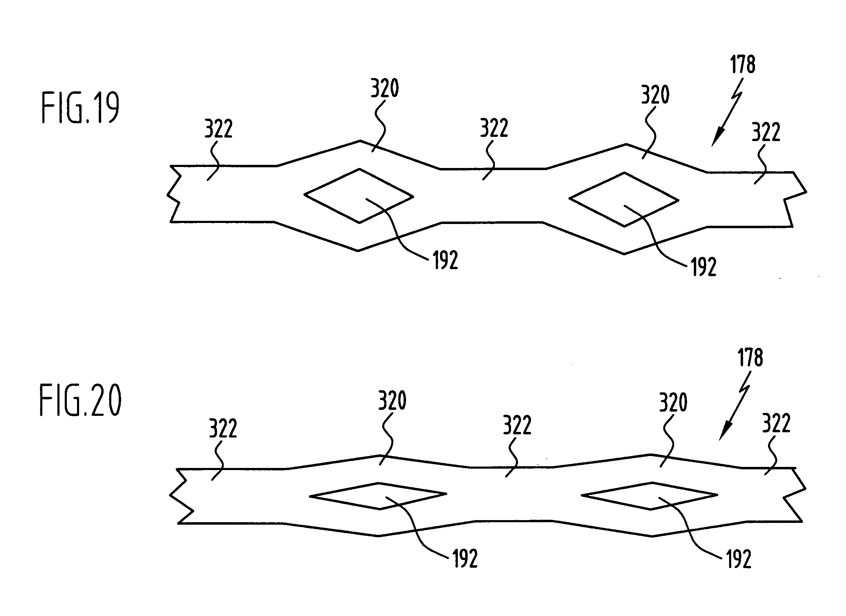

Bei einer in den Fig. 19 bis 20 dargestellten Variante der vorstehend beschriebenen ringförmigen Flächendichtung 178 sind die Kompensationsbereiche 320 der Flächendichtung 178 im warmen Betriebszustand nicht, wie bei der vorstehend beschriebenen Ausführungsform, im wesentlichen rechteckig, sondern sechseckig ausgebildet.

Ferner sind die Ausgleichsausnehmungen 192 bei dieser Ausführungsform so ausgebildet, daß sie bereits bei der hohen Betriebstemperatur eine rautenförmige Gestalt aufweisen (siehe Fig. 19).

Bei der Abkühlung auf die niedrigere Montagetemperatur (siehe Fig. 20) nimmt die Ausdehnung der Ausgleichsausnehmungen 192 längs der Umfangsrichtung der Flächendichtung 178 und der Welle 310 zu, während die axiale Ausdehnung der Ausgleichsausnehmungen 192 abnimmt, so daß die Ausgleichsausnehmungen 192 die Form abgeflachter Rauten und die Kompensationsbereiche 320 der Flächendichtung 178 die Form abgeflachter Sechsecke annehmen.

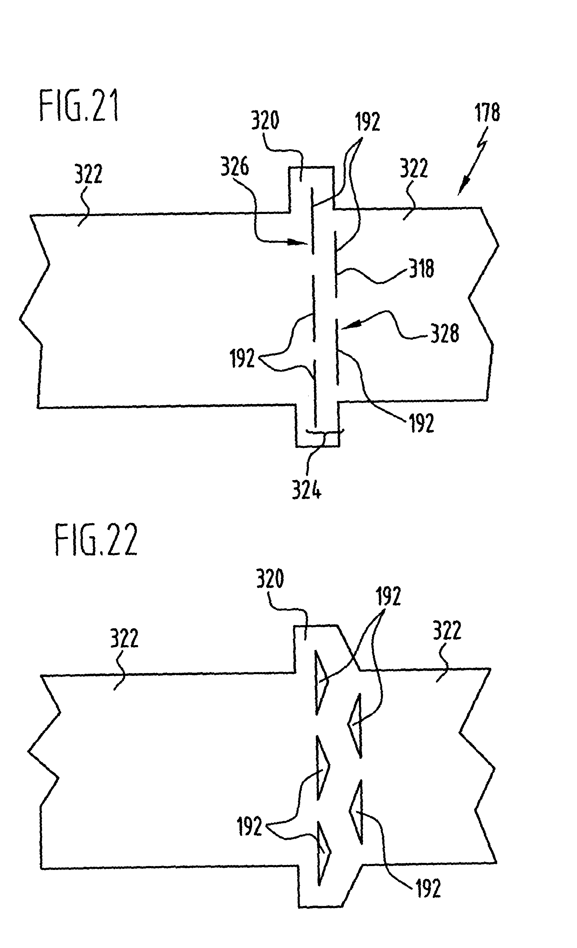

Bei einer in den Fig. 21 und 22 dargestellten weiteren Ausführungsform einer ringförmigen Flachdichtung 178 für eine Welle 310 sind in jedem Kompensationsbereich 320 der Flächendichtung 178 nicht nur jeweils eine Ausgleichsausnehmung 192, sondern mehrere solcher Ausgleichsausnehmungen 192 angeordnet, welche eine in axialer Richtung der Flächendichtung 178 und der Welle 310 verlaufende Doppelreihe 324 bilden.

Eine erste Reihe 326 dieser Doppelreihe 324 umfaßt mehrere, beispielsweise drei, bei der Betriebstemperatur im wesentlichen schlitzförmige Ausgleichsausnehmungen 192, welche in der axialen Richtung der Flächendichtung 178 voneinander beabstandet sind.

Eine zweite Reihe 328 der Doppelreihe 324 umfaßt ebenfalls mehrere, beispielsweise zwei, bei der Betriebstemperatur im wesentlichen schlitzförmige Ausgleichsausnehmungen 192, welche ebenfalls in axialer Richtung der Flächendichtung 178 voneinander beabstandet sind.

Die Ausgleichsausnehmungen 192 der zweiten Reihe 328 sind dabei in der Umfangsrichtung der Flächendichtung 178 von den Ausgleichsausnehmungen 192 der ersten Reihe 326 beabstandet und relativ zu den Ausgleichsausnehmungen 192 der ersten Reihe 326 in der axialen Richtung der Flächendichtung 178 versetzt angeordnet, und zwar vorzugsweise derart, daß die Mitte einer Ausgleichsausnehmung 192 der zweiten Reihe 328 jeweils ungefähr an derselben axialen Position liegt wie die Mitte des Zwischenraums zwischen zwei Ausgleichsausnehmungen 192 der ersten Reihe 326.

Bei der Abkühlung von der Betriebstemperatur auf die niedrigere Montagetemperatur (siehe Fig. 22) erweitern sich die Ausgleichsausnehmungen 192 der Doppelreihe 324 in der Umfangsrichtung der Flächendichtung 178 und der Welle 310, so daß die Ausgleichsausnehmungen 192 im Montagezustand eine ungefähr dreieckige Form annehmen.

Die vorstehend unter Bezugnahme auf die Fig. 16 bis 22 beschriebenen ringförmigen Flächendichtungen 178 eignen sich insbesondere zur Anordnung an Wellen 310 mit sehr großem Durchmesser.

Diese ringförmigen Flächendichtungen 178 weisen in ihrer axialen Richtung eine deutlich geringere Ausdehnung auf als in ihrer Umfangsrichtung.

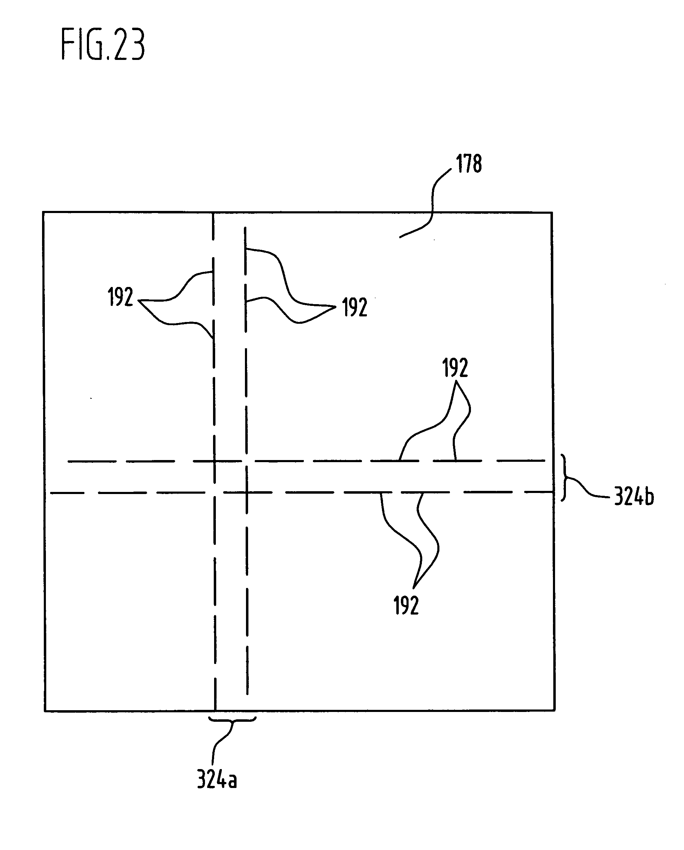

Das vorstehend im Zusammenhang mit den Fig. 21 und 22 erläuterte Prinzip der Anordnung von Ausgleichsausnehmungen 192 in Doppelreihen 324 kann jedoch ohne weiteres auch bei solchen Flächendichtungen 178 angewandt werden, welche in zwei zueinander senkrechten Richtungen eine große Ausdehnung aufweisen, wie dies in Fig. 23 dargestellt ist.

Die in Fig. 23 dargestellte Flächendichtung umfaßt eine erste Doppelreihe 324a von im warmen Betriebszustand im wesentlichen schlitzförmigen Ausgleichsausnehmungen 192 und eine zweite Doppelreihe 324b von im warmen Betriebszustand im wesentlichen schlitzförmigen Ausgleichsausnehmungen 192, wobei die Doppelreihe 324b quer, vorzugsweise im wesentlichen senkrecht, zu der Doppelreihe 324a verläuft, so daß eine Wärmedehnungskompensation der Flächendichtung 178 in zwei quer zueinander verlaufenden Richtungen erfolgen kann.

Natürlich könnten in jeder dieser quer zueinander verlaufenden Richtungen auch mehr als zwei Reihen von Ausgleichsausnehmungen 192 vorgesehen sein.

Wie aus Fig. 23 zu ersehen ist, kann insbesondere vorgesehen sein, daß sich Ausgleichsausnehmungen 192 der einen Doppelreihe 324a mit Ausgleichsausnehmungen 192 der zweiten Doppelreihe 324b kreuzen.

Das Anordnen von Ausgleichsausnehmungen 192 in Doppelreihen 324a, 324b ist besonders dann empfehlenswert, wenn die Flächendichtung 178 keine gitterartig angeordneten Durchtrittsöffnungen 180 aufweist, wie dies bei der in den Fig. 5 und 7 dargestellten Flächendichtung 178 der Fall ist.

Die Ausgleichsausnehmungen 192 der Flächendichtungen 178 aus den Fig. 16 bis 23 umfassen jeweils einen Ausgleichsbereich, dessen Breite sich bei einer Änderung der Temperatur so verändert, daß die unterschiedlichen Wärmedehnungen der jeweiligen Flächendichtung 178 und des Bauteils 112 zumindest teilweise ausgeglichen werden.

## Patentansprüche

1. Flächendichtung zur Anordnung an einem Bauteil (112), dessen Material eine andere Wärmedehnung aufweist als das Material der Flächendichtung (178),
**dadurch gekennzeichnet, daß**
die Flächendichtung (178) mit Ausgleichsausnehmungen (192) versehen ist, die jeweils mindestens einen Ausgleichsbereich (194, 196) umfassen, dessen Breite sich im montierten Zustand der Flächendichtung (178) bei einer Änderung der Temperatur der Flächendichtung (178) so verändert, daß die unterschiedlichen Wärmedehnungen der Flächendichtung (178) und des Bauteils (112) zumindest teilweise ausgeglichen werden.

2. Flächendichtung nach Anspruch 1, **dadurch gekennzeichnet, daß** die Flächendichtung (178) zur Anordnung an einer im wesentlichen ebenen Fläche des Bauteils (112) vorgesehen ist.

3. Flächendichtung nach einem der Ansprüche 1 oder 2, **dadurch gekennzeichnet, daß** die Flächendichtung (178) zur Anordnung an einer Mantelfläche des Bauteils (112) vorgesehen ist.

4. Flächendichtung nach einem der Ansprüche 1 bis 3, **dadurch gekennzeichnet, daß** die Flächendichtung (178) im montierten Zustand das Bauteil (112) ringförmig umgibt.

5. Flächendichtung nach einem der Ansprüche 1 bis 4, **dadurch gekennzeichnet, daß** die Flächendichtung (178) einstückig ausgebildet ist.

6. Flächendichtung nach einem der Ansprüche 1 bis 5, **dadurch gekennzeichnet, daß** mindestens einige der Ausgleichsausnehmungen (192) jeweils mindestens einen Ausgleichsbereich (194) umfassen, der eine quer, vorzugsweise im wesentlichen senkrecht, zu einer Umfangsrichtung des Bauteils (112) ausgerichtete Längsrichtung aufweist.

7. Flächendichtung nach einem der Ansprüche 1 bis 6, **dadurch gekennzeichnet, daß** mindestens einige der Ausgleichsausnehmungen (192) jeweils mindestens einen Ausgleichsbereich (196) umfassen, der eine im wesentlichen parallel zu einer Umfangsrichtung des Bauteils (112) ausgerichtete Längsrichtung aufweist.

8. Flächendichtung nach einem der Ansprüche 1 bis 7, **dadurch gekennzeichnet, daß** mindestens einige der Ausgleichsausnehmungen (192) jeweils mindestens zwei Ausgleichsbereiche (194, 196) umfassen.

9. Flächendichtung nach Anspruch 8, **dadurch gekennzeichnet, daß** mindestens einige der Ausgleichsausnehmungen (192) jeweils mindestens zwei Ausgleichsbereiche (194, 196) umfassen, die quer, vorzugsweise im wesentlichen senkrecht, zueinander ausgerichtete Längsrichtungen aufweisen.

10. Flächendichtung nach einem der Ansprüche 1 bis 9, **dadurch gekennzeichnet, daß** mindestens einige der Ausgleichsausnehmungen (192) jeweils einen zentralen Bereich (193) umfassen, in den mindestens zwei Ausgleichsbereiche (194, 196) der jeweiligen Ausgleichsausnehmung (192) münden.

11. Flächendichtung nach Anspruch 10, **dadurch gekennzeichnet, daß** mindestens einige der Ausgleichsausnehmungen (192) jeweils einen zentralen Bereich (193) umfassen, in den mindestens zwei Ausgleichsbereiche (194, 196) der jeweiligen Ausgleichsausnehmungen (192) münden, wobei diese Ausgleichsbereiche (194, 196) quer, vorzugsweise im wesentlichen senkrecht, zueinander ausgerichtete Längsrichtungen aufweisen.

12. Flächendichtung nach einem der Ansprüche 1 bis 11, **dadurch gekennzeichnet, daß** die Flächendichtung (178) außer den Ausgleichsausnehmungen (192) Zugangsöffnungen (180) aufweist, welche im montierten Zustand der Flächendichtung (178) Hohlräumen (126) in dem Bauteil (112) zugeordnet sind.

13. Flächendichtung nach Anspruch 12, **dadurch gekennzeichnet, daß** die Flächendichtung (178) die Zugangsöffnungen (180) voneinander trennende Stege (186, 188) umfaßt und daß mindestens einige der Ausgleichsausnehmungen (192) in Kreuzungsbereichen (190) der Stege (186, 188) angeordnet sind.

14. Flächendichtung nach einem der Ansprüche 1 bis 13, **dadurch gekennzeichnet, daß** die Flächendichtung (178) mindestens eine Doppelreihe (324) von Ausgleichsausnehmungen (192) umfaßt, wobei die Doppelreihe eine erste Reihe (326) von Ausgleichsausnehmungen und eine zweite Reihe (328) von Ausgleichsausnehmungen (192) umfaßt, die zweite Reihe (328) von Ausgleichsausnehmungen (192) im wesentlichen parallel zu der ersten Reihe (326) von Ausgleichsausnehmungen (192) ausgerichtet ist und die Ausgleichsausnehmungen (192) der zweiten Reihe (328) relativ zu den Ausgleichsausnehmungen (192) der ersten Reihe (326) in der Längsrichtung der Reihen (326, 328) versetzt angeordnet sind.

15. Flächendichtung nach Anspruch 14, **dadurch gekennzeichnet, daß** die Flächendichtung (178) mindestens zwei Doppelreihen (324) von Ausgleichsausnehmungen umfaßt, die quer, vorzugsweise im wesentlichen senkrecht, zueinander verlaufen.

16. Flächendichtung nach einem der Ansprüche 1 bis 15, **dadurch gekennzeichnet, daß** das Material der Flächendichtung (178) einen Kunststoff mit geringer Gleitreibung, vorzugsweise ein Fluorpolymer oder ein Fluorpolymer-Compound, umfaßt.

17. Kombination aus einem Bauteil (112) und einer an dem Bauteil (112) angeordneten Flächendichtung (178) nach einem der Ansprüche 1 bis 16, **dadurch gekennzeichnet, daß** das Bauteil (112) an seinem Umfang mit Mitnehmerelementen (214, 224) zum Spannen der Flächendichtung (178) versehen ist.

18. Kombination nach Anspruch 17, **dadurch gekennzeichnet, daß** die Mitnehmerelemente (214, 224) relativ zu dem Bauteil (112) beweglich sind.

19. Kombination nach einem der Ansprüche 17 oder 18, **dadurch gekennzeichnet, daß** die Mitnehmerelemente (214, 224) mittels Befestigungsschrauben (216) an dem Bauteil (112) gehalten sind.

20. Verfahren zum Anordnen einer Flächendichtung (178) an einem Bauteil (112), dessen Material eine andere Wärmedehnung aufweist als das Material der Flächendichtung (178), wobei die Flächendichtung (178) mit Ausgleichsausnehmungen (192) versehen ist, welche jeweils mindestens einen Ausgleichsbereich (194, 196) aufweisen, dessen Breite sich im montierten Zustand der Flächendichtung (178) bei einer Änderung der Temperatur der Flächendichtung (178) so verändert, daß die Unterschiede in den Wärmedehnungen der Flächendichtung (178) und des Bauteils (112) verringert werden, vorzugsweise im wesentlichen ausgeglichen werden, umfassend den folgenden Verfahrensschritt:
- Anordnen der Flächendichtung (178) an dem Bauteil (112) bei einer Montagetemperatur, die von einer Betriebstemperatur des Bauteils (112) verschieden ist, wobei die Flächendichtung (178) mit einer mechanischen Spannung beaufschlagt wird und die Ausgleichsbereiche (194, 196) mindestens einiger der Ausgleichsausnehmungen (192) ihre Breite unter Einwirkung der mechanischen Spannung verändern.

21. Verfahren nach Anspruch 20, **dadurch gekennzeichnet, daß** sich die Breite der Ausgleichsbereiche (194, 196) mindestens einiger der Ausgleichsausnehmungen (192) bei einer Änderung der Temperatur der Flächendichtung (178) von der Montagetemperatur zu der Betriebstemperatur verändert.

22. Verfahren nach Anspruch 21, **dadurch gekennzeichnet, daß** sich die Breite der Ausgleichsbereiche (194, 196) mindestens einiger der Ausgleichsausnehmungen (192) bei einer Änderung der Temperatur der Flächendichtung (178) von der Montagetemperatur zu der Betriebstemperatur verringert.

23. Verfahren nach einem der Ansprüche 20 bis 22, **dadurch gekennzeichnet, daß** die Flächendichtung (178) bei der Montage an dem Bauteil (112) mittels an dem Bauteil (112) angeordneter Mitnehmerelemente (214, 224) gespannt wird.

24. Verfahren nach einem der Ansprüche 20 bis 23, **dadurch gekennzeichnet, daß** die Flächendichtung (178) bei der Montage an dem Bauteil (112) zumindest zeitweise mit einer im wesentlichen parallel zu einer Umfangsrichtung des Bauteils (112) gerichteten mechanischen Spannkraft beaufschlagt wird.

25. Verfahren nach einem der Ansprüche 20 bis 24, **dadurch gekennzeichnet, daß** die Flächendichtung (178) bei der Montage an dem Bauteil (112) zumindest zeitweise mit einer im wesentlichen quer, vorzugsweise im wesentlichen senkrecht, zu einer Umfangsrichtung des Bauteils (112) gerichteten mechanischen Spannkraft beaufschlagt wird.

26. Verfahren nach einem der Ansprüche 20 bis 25, **dadurch gekennzeichnet, daß** die Flächendichtung (178) bei der Montage an dem Bauteil (112) in einer Montagephase mit einer im wesentlichen parallel zu einer Umfangsrichtung (187) des Bauteils (112) gerichteten mechanischen Spannkraft und während einer anderen Montagephase mit einer im wesentlichen quer, vorzugsweise im wesentlichen senkrecht, zu der Umfangsrichtung (187) des Bauteils (112) gerichteten mechanischen Spannkraft beaufschlagt wird.
